(19) Europäisches Patentamt / European Patent Office / Office européen des brevets

(11) **EP 3 185 110 B1**

(12) **FASCICULE DE BREVET EUROPEEN**

(45) Date de publication et mention de la délivrance du brevet:
**02.09.2020 Bulletin 2020/36**

(51) Int Cl.:
*G06F 3/046* *(2006.01)*    *G06F 3/0346* *(2013.01)*
*G06F 3/041* *(2006.01)*    *G06F 3/038* *(2013.01)*
*G06F 3/01* *(2006.01)*     *H04W 52/02* *(2009.01)*

(21) Numéro de dépôt: **16205902.6**

(22) Date de dépôt: **21.12.2016**

(54) **ELÉMENT MOBILE HYBRIDE, PROCÉDÉ ET DISPOSITIF POUR INTERFACER UNE PLURALITÉ D'ÉLÉMENTS MOBILES HYBRIDES AVEC UN SYSTÈME INFORMATIQUE, ET ENSEMBLE POUR SYSTÈME DE RÉALITÉ VIRTUELLE OU AUGMENTÉE**

HYBRID-MOBILELEMENT, VERFAHREN UND VORRICHTUNG ZUM VERBINDEN EINER VIELZAHL VON HYBRID-MOBILELEMENTEN ÜBER EINE SCHNITTSTELLE MIT EINEM IT-SYSTEM, UND EINHEIT FÜR SYSTEM EINER VIRTUELLEN ODER GESTEIGERTEN REALITÄT

HYBRID MOBILE ELEMENT, METHOD AND DEVICE FOR INTERFACING A PLURALITY OF HYBRID MOBILE ELEMENTS WITH A COMPUTER SYSTEM, AND ASSEMBLY FOR VIRTUAL OR AUGMENTED REALITY SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.12.2015 FR 1563352**

(43) Date de publication de la demande:
**28.06.2017 Bulletin 2017/26**

(73) Titulaire: **Starbreeze Paris**
**75008 Paris (FR)**

(72) Inventeurs:
• **LEFEVRE, Valentin**
**92800 PUTEAUX (FR)**
• **CHABIN, Laurent**
**92600 ASNIERES SUR SEINE (FR)**
• **DUTEIL, Christophe**
**75014 PARIS (FR)**

(74) Mandataire: **Santarelli**
**49, avenue des Champs-Elysées**
**75008 Paris (FR)**

(56) Documents cités:
WO-A1-2012/028827    GB-A- 2 428 802

## Description

DOMAINE DE L'INVENTION

La présente invention concerne la localisation d'éléments mobiles par un système informatique, notamment dans le domaine des sols intelligents. Elle a notamment des applications dans le domaine de la réalité virtuelle ou de la réalité augmentée. L'invention concerne plus particulièrement un élément mobile hybride, un dispositif et un procédé pour interfacer une pluralité d'éléments mobiles hybrides avec un système informatique.

CONTEXTE DE L'INVENTION

Dans de nombreuses situations, il peut être nécessaire, pour un système informatique, de détecter la localisation (ex. position, orientation, altitude) d'éléments mobiles pour permettre à ce dernier de réagir en conséquence, et de permettre d'utiliser ces éléments mobiles comme interface d'un système informatique.

La présente invention s'intéresse particulièrement à la détection d'éléments mobiles par exemple portés par des utilisateurs humains ou encore des robots. Ces utilisateurs peuvent par exemple se déplacer sur un terrain de jeu, ou à l'intérieur d'un bâtiment. De plus, ces utilisateurs peuvent effectuer des mouvements de grande amplitude, ce qui impose des contraintes particulières, notamment en termes de suivi de position.

Il existe des systèmes de localisation permettant un suivi continu des déplacements de grande amplitude.

Une solution consiste à utiliser une centrale inertielle, laquelle est définie comme un ensemble de capteurs (par exemple, gyroscopes et accéléromètres, magnétomètres) permettant de mesurer des paramètres du mouvement d'un élément mobile. Toutefois, dans la pratique, le fonctionnement s'écarte des équations idéales à cause des erreurs qui affectent les mesures des rotations et des accélérations (par exemple biais, bruits, facteurs d'échelle, non-linéarités) et qui engendrent des dérives au cours du temps des estimations par exemple de la vitesse et de la position de l'élément mobile considéré. Egalement, des chocs subis par l'élément mobile peuvent causer des erreurs importantes dans les mesures de la centrale inertielle.

Ainsi, une telle solution n'est-elle pas adaptée à des applications dont la durée dépasse quelques minutes voire quelques secondes, comme par exemple des applications de réalité virtuelle ou de réalité augmentée.

Une autre solution possible ne souffrant pas d'une telle dérive est la localisation par un GPS différentiel (en anglais *Differential Global Positioning System*) qui utilise un réseau de stations fixes de référence transmettant à un récepteur l'écart entre les positions indiquées par les satellites et leurs positions réelles connues. Le récepteur reçoit ainsi la différence entre les pseudo-distances mesurées par les satellites et les véritables pseudo-distances et peut ainsi corriger ses propres mesures.

Toutefois, ce type de localisation n'est pas adapté à la localisation d'éléments mobiles situés à l'intérieur d'un bâtiment. De plus, la précision du GPS différentiel est de l'ordre d'une dizaine de centimètres, ce qui peut être insuffisant pour certaines applications, notamment de réalité virtuelle ou de réalité augmentée. De plus, cette technologie est très sensible à la présence d'objets métalliques, qui peuvent fausser les mesures de position.

Il existe d'autres technologies de localisation, notamment fonctionnant par triangulation terrestre, par exemple UWB (en anglais *Ultra Wide Band*) ou encore iBeacon, permettant la localisation d'éléments à l'intérieur des bâtiments. Dans leur principe, ces technologies sont utilisées pour le positionnement de mobiles embarquant des balises capable d'émettre des données captées par des récepteurs répartis dans l'environnement, par exemple à l'intérieur d'un bâtiment. Ces récepteurs évaluent la distance les séparant respectivement des balises par mesure du temps de propagation des signaux, ce qui permet au système de calculer la position des mobiles par triangulation.

Ces technologies présentent l'inconvénient de nécessiter la calibration des balises. De plus, la précision de la position calculée par triangulation est de l'ordre de 15 cm, ce qui peut être insuffisant pour certaines applications, par exemple de réalité virtuelle ou de réalité augmentée. En outre, les méthodes de triangulation utilisées sont peu adaptées à la localisation d'une pluralité d'éléments, des problèmes d'engorgement du système étant rapidement observés. Ces technologies sont également sensibles à la présence d'éléments métalliques (par exemple des cloisons à structure métallique, des poutres métalliques ou encore des armoires métalliques) qui viennent considérablement perturber les mesures de position du fait des chemins multiples des ondes. La présence de ces éléments métalliques diminue fortement la précision du calcul final de la position (précision de plus de 1m).

Dans le domaine particulier des applications de réalité virtuelle et de réalité augmentée, il existe des solutions de localisation basées sur des moyens optiques, notamment des caméras.

Toutefois, ces solutions requièrent des installations particulières (ex. rails de LEDs à disposer dans l'environnement, nombreuses caméras parfois embarquant des moyens de calculs pour l'analyse d'images en temps réel, ou encore constellations de cibles infrarouges permettant à des caméras de calculer des positions) et souvent très coûteuses donc peu réalistes pour des applications grand public. De plus, ces solutions sont particulièrement sensibles à l'environnement dans lequel évolue l'élément mobile, notamment à la qualité visuelle de l'environnement, laquelle peut être altérée par exemple par de la fumée, du brouillard, ou encore une faible luminosité. Elles sont également sensibles au masquage des moyens optiques par des obstacles physiques, typiquement par un autre élément mobile, et sont donc peu adaptées au suivi dans le temps d'une pluralité d'éléments mobiles.

Le document GB2428802 décrit un exemple d'élément mobile hybride portable par un utilisateur humain.

## RESUME DE L'INVENTION

L'invention permet de résoudre au moins un des problèmes exposés précédemment.

L'invention a ainsi pour objet un élément mobile hybride selon la revendication 1.

L'élément mobile hybride selon l'invention permet ainsi à un système informatique de déterminer simplement et efficacement la position d'un nombre important d'éléments mobiles pouvant être utilisés pour interagir avec ce système informatique, même lorsque certains de ces éléments mobiles sont momentanément hors de portée du dispositif d'interfaçage de sorte que leur module de localisation ne peut envoyer de signal à un moment donné.

En effet, grâce à l'utilisation d'une centrale inertielle solidaire d'un module de localisation donné, bien que celui-ci ne puisse émettre de signal permettant de calculer directement une information de position, il est néanmoins possible de calculer cette information de position à partir de données de déplacement de la centrale inertielle et d'une information de position antérieure calculée à un moment où le dispositif pouvait recevoir un signal émis par ce module de localisation. Ce type de calcul, puisqu'il est basé sur deux types de données, à savoir une information de position calculée à partir d'un signal reçu du module de localisation et des données de déplacement de la centrale inertielle solidaire de ce module, est appelé calcul hybride.

Avantageusement, les informations de position qui pourront être déduites des données de déplacement de la centrale inertielles seront représentatives de la position de l'élément mobile hybride puisque celui-ci est fixe par rapport à (rigidement lié avec) la centrale inertielle.

De plus, l'utilisation combinée de la centrale inertielle et du module de localisation permet d'éviter le phénomène de dérive des données de la centrale inertielle.

Selon un mode de réalisation particulier, les moyens de communication de l'élément mobile hybride sont en outre configurés pour recevoir au moins une information de position dudit module de localisation. Par exemple cette information de position a été calculée par le dispositif à partir de signaux électromagnétiques émis par le module de localisation.

Selon un mode de réalisation particulier, le calcul hybride de la position est effectué au niveau de l'élément mobile hybride.

Dans ce mode, l'élément mobile hybride comprend en outre des moyens de calcul hybride d'une nouvelle information de position dudit module de localisation, à partir de l'information de position reçue et des données de déplacement de la centrale inertielle.

Les moyens de communication peuvent alors en outre être configurés pour transmettre ladite nouvelle information de position dudit module de localisation, par exemple au dispositif.

Selon un mode de réalisation particulier, les moyens de communication de l'élément mobile hybride sont configurés pour recevoir des données de recalage des données de déplacement de la centrale inertielle lesdites données de recalage étant basées sur une information de position calculée à partir d'un signal électromagnétique émis par ledit module de localisation.

Ces données de recalage sont par exemple une information de position calculée par le dispositif à partir de signaux électromagnétiques émis par le module de localisation à un instant donné.

Selon un mode de réalisation particulier, l'élément mobile hybride est configuré pour recaler les données de déplacement de la centrale inertielle à chaque activation du module de localisation. Dans ce mode, chaque information de position calculée par le dispositif à partir de signaux électromagnétiques émis par le module de localisation est envoyée à l'élément mobile hybride.

Les moyens pour émettre un signal comprennent par exemple un solénoïde émettant un champ électromagnétique lorsqu'il est activé, pour permettre de déterminer la position et/ou l'orientation de l'élément mobile hybride. En variante, les moyens pour émettre le signal peuvent comprendre tout autre moyen d'émission d'un champ électromagnétique.

L'élément mobile hybride peut comprendre en outre des moyens de télé-alimentation pour alimenter électriquement des composants du module de localisation.

Par exemple, l'élément mobile hybride peut comprendre au moins un solénoïde, excitable par induction. L'élément mobile hybride peut comprendre tout autre moyen de télé-alimentation, par exemple des antennes utilisant la technologie Powercast (Powercast est une marque).

L'élément mobile hybride peut comprendre des moyens de stockage d'énergie tels qu'une batterie, une pile ou un condensateur.

L'invention a également pour objet un dispositif selon la revendication 9.

Selon un mode de réalisation particulier, les moyens de communication du dispositif sont en outre configurés pour :

- transmettre l'information de position calculée à partir du signal électromagnétique reçu, à l'élément mobile hybride ; et
- pour recevoir ladite nouvelle information de position, calculée par l'élément mobile hybride à partir de l'information de position transmise.

Selon un mode de réalisation particulier, les moyens de communication du dispositif sont configurés pour transmettre des données de recalage des données de déplacement de la centrale inertielle, lesdites données de recalage étant basées sur une information de position calculée à partir d'un signal électromagnétique reçu.

Ces données de recalage sont par exemple une information de position calculée par le dispositif à partir de signaux électromagnétiques émis par le module de localisation à un instant donné.

L'invention a aussi pour objet un dispositif comprenant une pluralité de dispositifs tels que décrits précédemment, un dispositif de la pluralité de dispositifs contrôlant au moins certains moyens mis en œuvre dans les autres dispositifs de la pluralité de dispositifs. Il est ainsi possible d'augmenter la taille de la surface sur laquelle peuvent évoluer les éléments mobiles hybrides.

Avantageusement, les moyens pour activer séquentiellement au moins un module de localisation pourraient comprendre des moyens pour émettre un signal haute fréquence comprenant un identifiant d'un module de localisation. Le dispositif pourrait ainsi sélectionner aisément un module de localisation particulier selon son identifiant.

Le signal reçu pourrait par exemple être un champ électromagnétique. Les moyens pour recevoir au moins un signal d'un module de localisation activé pourraient également comprendre une grille conductrice formée d'un ensemble de boucles conductrices, et le dispositif pourrait alors comprendre des moyens pour sélectionner séquentiellement chaque boucle conductrice de cet ensemble de boucles conductrices. Il serait ainsi possible de déterminer la position d'un module de localisation selon des caractéristiques des signaux reçus et des boucles conductrices sélectionnées.

De façon avantageuse, le dispositif pourrait également comprendre des moyens de filtrage du signal reçu afin d'éliminer les signaux parasites.

La surface détection comprend par exemple une surface en plastique PET sur laquelle la grille conductrice a été formée par sérigraphie argent. Par exemple, la grille conductrice a été formée par impression utilisant un jet d'encre conductrice contenant des particules d'argent.

En variante, la surface détection comprend par exemple une surface en plastique PET sur laquelle la grille conductrice a été formée avec des pistes en cuivre. Selon une autre variante, la grille conductrice est formée par tissage avec un fil conducteur.

Selon encore une autre variante, la surface détection comprend par exemple une carte de type PCB (sigle de *Printed Circuit Board* en terminologie anglo-saxonne) de réception électromagnétique, souple ou rigide.

L'invention a également pour objet un procédé selon la revendication 13.

Selon un mode de réalisation particulier, le procédé comprend en outre une étape de recalage des données de déplacement de la centrale inertielle.

Ces données sont par exemple calculées à partir d'une ou plusieurs informations de position calculées à partir de signaux reçus du module de localisation.

Selon un premier mode de réalisation, le procédé comprend en outre une étape de mémorisation de ladite information de position obtenue avec la date de son calcul, ladite étape de recalage étant mise en œuvre à partir de ladite information de position mémorisée.

Selon un deuxième mode de réalisation, le procédé comprend en outre une étape de réception d'une information indiquant un défaut de réception d'un signal électromagnétique en provenance dudit au moins un module de localisation activé.

Dans ce deuxième mode, le procédé peut comprendre en outre une étape de réception de données de recalage, ladite étape de recalage étant mise en œuvre à partir des données de recalage reçues.

Dans ce deuxième mode, le procédé peut comprendre en outre une étape de transmission de la nouvelle information de position calculée.

L'élément mobile hybride ou le dispositif, selon les modes, peut donc recaler les données de déplacement de la centrale inertielle à l'aide des données de recalage. On évite ainsi les problèmes de dérive dans le temps parfois observés lors de l'utilisation prolongée d'une centrale inertielle ou de choc subis par celle-ci.

Avantageusement, un tel procédé pourrait comprendre en outre une étape de contrôle de validité de l'au moins un module de localisation, l'étape d'activation séquentielle du module de localisation étant effectuée en réponse à l'étape de contrôle de validité. Ainsi, seules les positions et/ou orientations des éléments mobiles hybrides situés dans la portée (électromagnétique) de la surface de détection seraient déterminées.

Un tel procédé pourrait aussi comprendre une étape d'assignation d'un état de validité ou d'invalidité au module de localisation, l'état de validité ou d'invalidité étant déterminé selon la ou les informations de position.

Le procédé pourrait aussi comprendre une étape de sélection séquentielle d'une pluralité de récepteurs, ledit au moins un signal étant reçu d'au moins un récepteur sélectionné dans la pluralité de récepteurs. Il serait ainsi possible de déterminer la position d'un module de localisation selon des caractéristiques des signaux électromagnétiques reçus et des récepteurs sélectionnés.

L'invention a aussi pour objet un ensemble pour système de réalité virtuelle ou augmentée, destiné à équiper un utilisateur en mouvement, ledit système comprenant :

- au moins un élément mobile hybride tel que mentionné précédemment, adapté à être porté par l'utilisateur ;
- au moins un dispositif d'interfaçage tel que mentionné précédemment ;

- un casque de réalité virtuelle ou augmentée, adapté à être porté par l'utilisateur, ledit casque étant connecté audit élément mobile hybride ou audit dispositif d'interfaçage de sorte à permettre le suivi de la position du casque en fonction de la position relative de l'élément mobile hybride et du casque et de la position de l'élément mobile hybride.

Selon un mode de réalisation particulier, cet ensemble comprend en outre un système de positionnement magnétique comprenant un moyen d'émission d'un champ magnétique dans une pluralité de directions et une pluralité de moyens de réception dudit champ magnétique émis par le moyen d'émission, ledit système de positionnement magnétique étant configuré pour déterminer la position d'au moins un des moyens de réception dans un repère centré sur le moyen d'émission, à partir du champ magnétique reçu par ledit moyen de réception.

BREVE DESCRIPTION DES FIGURES

D'autres avantages, buts et caractéristiques de la présente invention ressortent de la description détaillée qui suit, faite à titre d'exemple non limitatif, au regard des dessins annexés dans lesquels :

- la figure 1, composée des figures 1a et 1b, illustre schématiquement un contexte dans lequel des modes de réalisation de l'invention peuvent avantageusement être mis en œuvre ;
- la figure 2 illustre un exemple de dispositif d'interfaçage selon un mode particulier de réalisation ;
- la figure 3, composée des figures 3a et 3b, illustre schématiquement le principe physique de couplage inductif entre un solénoïde et une boucle conductrice d'une surface de détection (figure 3a), ainsi qu'un mécanisme d'interpolation (figure 3b) permettant de déterminer la position d'un solénoïde placé sur une surface de détection, selon un axe donné, à partir des mesures obtenues par un système tel que celui décrit en référence à la figure 2;
- les figures 4a et 4b sont des organigrammes représentant des étapes mises en œuvre respectivement par un dispositif (figure 4a) et un élément mobile hybride (figure 4b) selon un premier mode de réalisation de l'invention;
- les figures 4c et 4d sont des organigrammes représentant des étapes mises en œuvre respectivement par un dispositif (figure 4c) et un élément mobile hybride (figure 4d) selon un second mode de réalisation de l'invention ;
- les figures 5a et 5b illustrent schématiquement deux exemples d'éléments mobiles hybrides dont la position peut être déterminée et dont la position et l'orientation peuvent être déterminées, respectivement, conformément à des modes particuliers de l'invention ;
- la figure 6 illustre schématiquement des blocs logiques d'un élément mobile hybride dont la position peut être déterminée à partir d'un dispositif d'interfaçage tel qu'illustré sur la figure 2 ;
- les figures 7, 8 et 9 illustrent trois exemples d'applications dans lesquelles des éléments mobiles hybrides selon l'invention peuvent être avantageusement utilisés.

DESCRIPTION DETAILLEE DE L'INVENTION

De façon générale, l'invention a pour objet de déterminer la position (abscisse, ordonnée et/ou altitude) et/ou l'orientation (cap, tangage et/ou roulis) d'éléments mobiles hybrides utilisés conjointement, et par exemple portés par un utilisateur (ou un robot) susceptible d'effectuer des mouvements de grande amplitude.

Il existe des solutions pour détecter la position et/ou l'orientation d'une pluralité d'objets réels, notamment lorsque ceux-ci sont situés à proximité ou sur un plateau de jeu permettant d'utiliser ces objets comme interface d'un système informatique. Par exemple, le brevet français n°1057014 propose une telle solution. Malheureusement, cette solution ne permet de calculer de telles informations de position que dans la mesure où ces objets sont dans le champ de détection d'une surface de détection, par exemple à moins d'une dizaine de centimètres de cette surface de détection.

Dans ce qui suit, la portée de détection d'un détecteur est définie comme une zone limitée dans l'espace, dans laquelle un champ électromagnétique émis par un émetteur situé dans cette zone peut être détecté par un détecteur. Ainsi, lorsque l'émetteur sort de la portée de détection du détecteur, le détecteur ne pourra pas capter un champ électromagnétique émis par l'émetteur.

Ainsi, un élément mobile hybride porté par un utilisateur se déplaçant sur un sol constitué par exemple d'un ensemble de surfaces de détection (aussi appelé sol intelligent) peut, de par les mouvements de l'utilisateur (ou du robot), s'éloigner sensiblement de la surface de détection et sortir de sa portée de détection, de sorte que le suivi de cet élément mobile hybride par le système informatique ne peut être continu.

Egalement, lorsque les surfaces de détection ne couvrent que partiellement un bâtiment, par exemple pour des raisons de coûts, il peut exister des discontinuités dans le suivi de la position de l'élément mobile hybride, notamment lorsque l'utilisateur (ou le robot) qui le porte entre dans une zone non-couverte par une surface de détection.

Afin de permettre le suivi de tels éléments mobiles, notamment lorsqu'ils sont portés par un ou plusieurs utilisateurs (ou robots) effectuant des mouvements de grande amplitude, l'invention prévoit un élément mobile hybride pourvu d'au moins un module de localisation solidaire d'une centrale inertielle dont le fonctionnement autonome permet d'obtenir des données de déplacement, ainsi que de moyens de communication (émetteur-récepteur) avec la surface de détection.

Lorsqu'un tel élément mobile hybride est hors de la portée de détection de la surface de détection, une information de position de son module de localisation peut néanmoins être obtenue à partir de données de déplacement de la centrale inertielle solidaire du module de localisation. Un tel mode de détermination est appelé calcul hybride de l'information de position, puisqu'il est basé à la fois sur les données de déplacement de la centrale inertielle, mais aussi sur une information de position précédemment calculée lorsque le module de localisation était dans la portée de détection.

Dans le cadre de la présente invention, plusieurs modes de réalisation sont envisagés pour le calcul hybride.

Selon un premier mode de réalisation, le calcul hybride est effectué au niveau de la surface de détection. Dans ce mode, des données de déplacement mesurées par la centrale inertielle sont directement transmises à la surface de détection via les moyens de communication. Une nouvelle information de position est alors calculée par la surface de détection à partir de ces données de déplacement et d'une information de position précédemment calculée.

Selon un second mode de réalisation, le calcul hybride est effectué au niveau de l'élément mobile hybride. Dans ce mode, la surface de détection envoie une information de position précédemment calculée à l'élément mobile hybride. Cette information de position a typiquement été calculée à partir d'un signal électromagnétique reçu du module de localisation alors qu'il était dans la portée de détection de la surface de détection. Il s'agit par exemple de la dernière position calculée avant que l'élément mobile hybride ne sorte de la portée de la surface de détection. L'élément mobile hybride calcule alors une nouvelle information de position à l'aide de l'information de position reçue et de données de déplacement mesurées par la centrale inertielle. Cette position hybride est ensuite transmise via les moyens de communication prévus sur l'élément mobile hybride.

Ainsi, les données de déplacement obtenues grâce au fonctionnement autonome de la centrale inertielle permettent le suivi de la position de l'élément mobile hybride, même lorsque le module de localisation qu'il intègre sort momentanément de la portée de la détection de la surface de détection.

De plus, lorsque le module de localisation d'un élément mobile hybride est dans la portée de détection de la surface de détection, il est possible de calculer des informations de position du module de localisation avec une certaine fiabilité, ce qui permet de recaler les données de déplacement de la centrale inertielle associée, par exemple avec des données de recalage basées sur ces informations de position fiables.

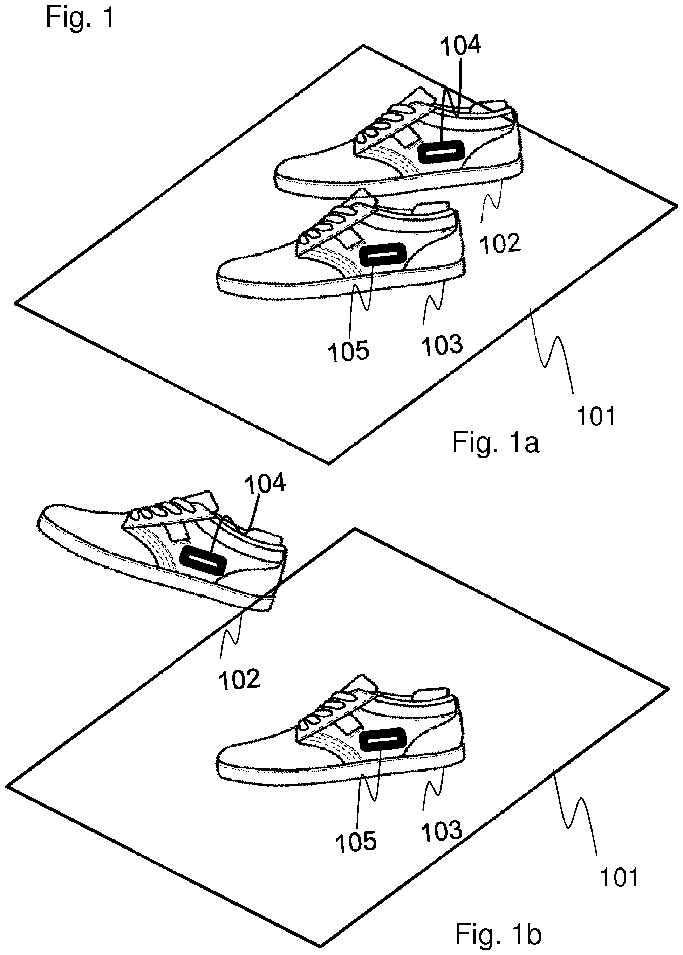

La **figure 1**, composée des figures 1a et 1b, illustre schématiquement un contexte dans lequel des modes de réalisation de l'invention peuvent être mis en œuvre. Les applications de la présente invention ne sont pas limitées à l'exemple illustré sur cette figure. Un élément mobile hybride selon l'invention peut en effet équiper tout type d'objet (vêtement porté, robot, manette de jeu, etc.).

En particulier, les figures 1a et 1b représentent la même scène mais à deux instants différents.

Dans cette scène, un utilisateur dont seules les chaussures 102 et 103 sont représentées, se trouve sur un élément de sol 101 (ou dispositif d'interfaçage) conforme à des modes de réalisation de l'invention. Même si dans cet exemple, le dispositif d'interfaçage est un élément de sol, l'invention n'est pas limitée aux dispositifs d'interfaçages placés au niveau du sol. Dans la suite, tout ce qui est décrit en référence à l'élément de sol 101 peut être facilement transposé par l'homme du métier à tout dispositif d'interfaçage placé ailleurs qu'au sol, par exemple sur des murs latéraux ou au plafond.

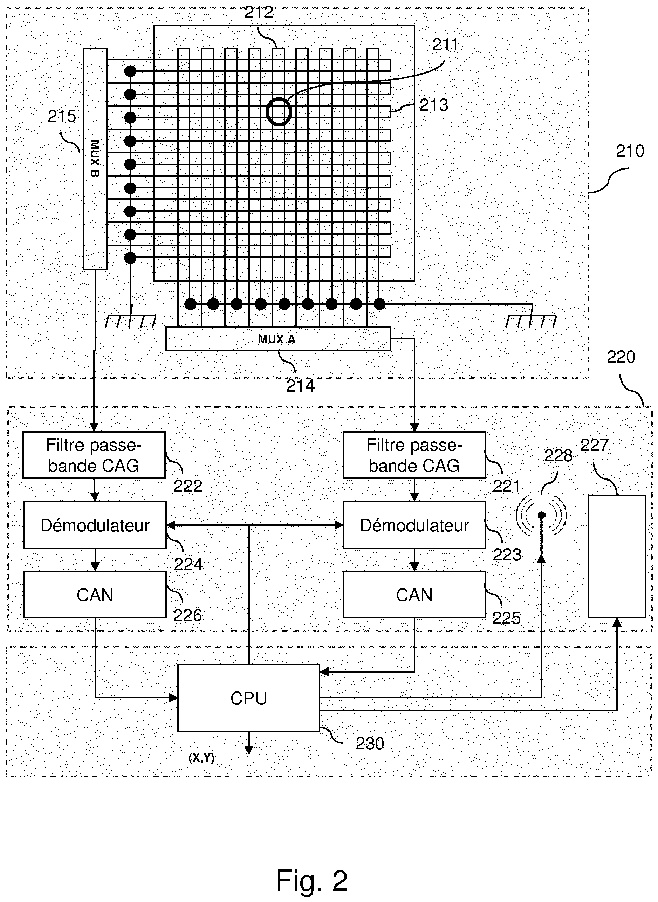

L'élément de sol 101 comprend par exemple un module matériel ainsi qu'une surface de détection tels que décrits en référence à la figure 2. De par sa structure, cette surface de détection a une portée de détection limitée, par exemple de l'ordre d'une dizaine de centimètres.

Le module matériel de l'élément de sol 101 comprend des moyens de communication (émetteur-récepteur), par exemple un module de communication sans fil de type WIFI ou Bluetooth ou encore communiquant dans une bande ISM (acronyme de Industriel, Scientifique et Médical) par exemple 2,4 GHz. Ces moyens de communication permettent à l'élément de sol d'interagir avec des éléments mobiles hybrides conformes à des modes de réalisation.

Par exemple, ces moyens de communication peuvent correspondre à un émetteur radio permettant d'activer un module de localisation d'un élément mobile hybride, tel que décrit en référence à la figure 2, afin qu'il émette un champ électromagnétique utile au calcul de sa position.

Le module matériel de l'élément de sol 101 comprend en outre un module de calcul comprenant une unité centrale de traitement. Cette unité de traitement commande par exemple les moyens de communication susmentionnés.

Dans cet exemple, chaque chaussure 102 (respectivement 103) est équipée d'un élément mobile hybride 104 (respectivement 105) conforme à des modes de réalisation de l'invention. Bien entendu, l'invention n'est pas limitée à deux éléments mobiles hybrides et un nombre bien plus important d'éléments mobiles hybrides peut être pris en charge par un même élément de sol 101.

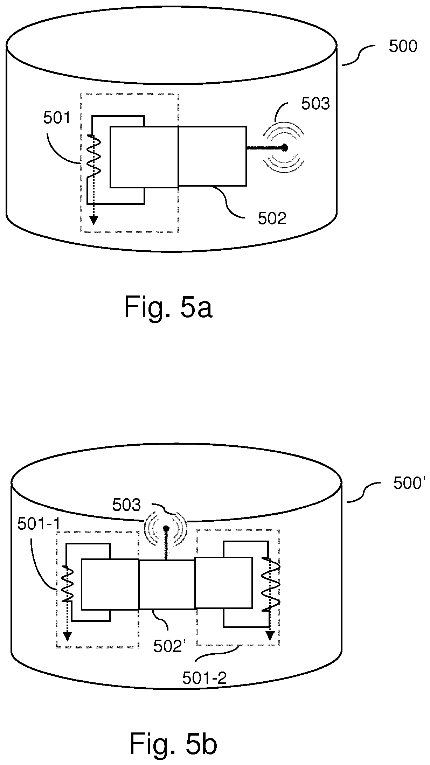

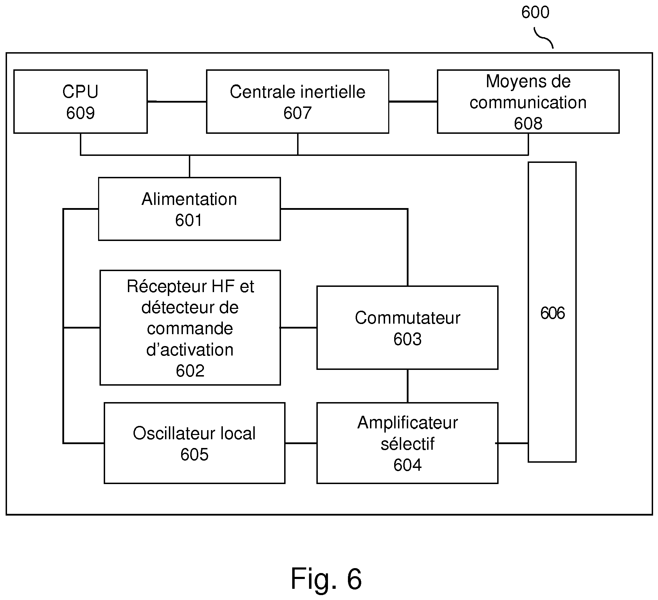

Ces éléments mobiles hybrides comprennent chacun au moins un module de localisation tel que décrit en référence aux figures 5 et 6.

Selon des modes particuliers de réalisation de la présente invention, les éléments mobiles hybrides 104 et 105 comprennent en plus une centrale inertielle solidaire de chaque module de localisation. Ainsi une centrale inertielle donnée est fixe par rapport au module de localisation associé.

Une telle centrale inertielle comprend par exemple un ou plusieurs accéléromètres, un ou plusieurs magnétomètres, et/ou un ou plusieurs gyromètres. Ainsi, une centrale inertielle permet d'obtenir des données de déplacement comme par exemple une vitesse de rotation à un instant donné autour d'un certain axe, une accélération à un instant donné selon un certain axe, ou encore une estimation de la direction du champ magnétique à un instant donné.

Toujours selon des modes particuliers de réalisation de la présente invention, les éléments mobiles hybrides 104 et 105 comprennent respectivement des moyens de communication (non représentés) sans fil de type WIFI ou Bluetooth ou encore communiquant dans une bande ISM (acronyme de Industriel, Scientifique et Médical) par exemple 2,4 GHz. Ces moyens de communication permettent aux éléments mobiles hybrides d'interagir avec les moyens de communication correspondants de l'élément de sol 101.

Par exemple, ces moyens de communication peuvent correspondre à un émetteur/récepteur radio détecteur de commande d'activation, tel que décrit en référence à la figure 6.

En variante, il peut s'agir de moyens séparés. Par exemple la centrale inertielle peut comprendre ces moyens de communication.

Lorsque les chaussures 102 et 103 de l'utilisateur sont posées sur l'élément de sol 101, comme représenté sur la figure 1a, les éléments mobiles hybrides 104 et 105 qu'elles portent sont dans la portée de détection de l'élément de sol 101.

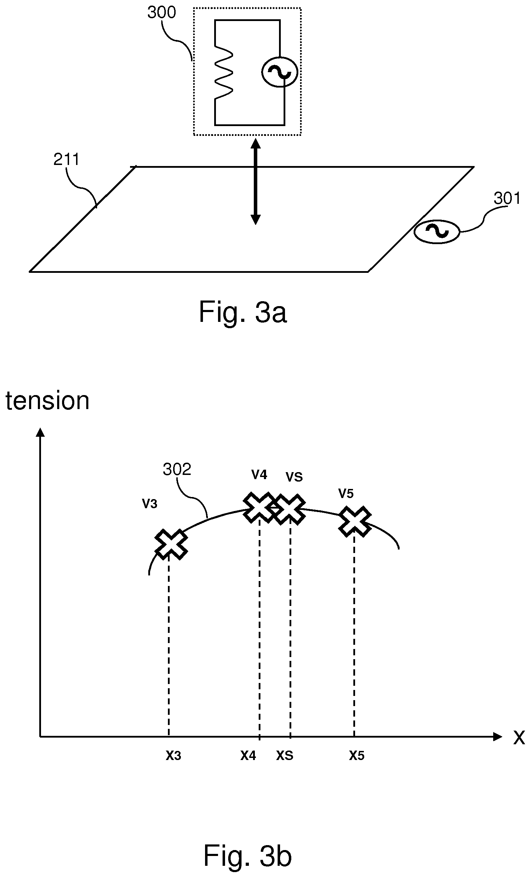

Il est donc possible d'activer séquentiellement les modules de localisation des éléments mobiles hybrides 104 et 105 et de déterminer leur position respective en mettant en œuvre une étape de calcul basée sur les signaux (champs magnétiques) reçus de ces modules de localisation, telle que décrite en référence à la figure 3.

En revanche, lorsque l'utilisateur déplace une de ses chaussures, par exemple la chaussure 102, comme représenté sur la figure 1b, l'élément mobile hybride 104 porté par celle-ci peut sortir de la portée de détection de l'élément de sol 101.

Lorsque l'élément mobile hybride sort de la portée de détection de l'élément de sol comme c'est le cas sur la figure 1b, celui-ci ne peut pas recevoir de signal (champ magnétique) émis par le module de localisation activé et ne peut donc pas déterminer la position de ce module à partir de celui-ci.

Il existe d'autres situations dans lesquelles l'élément mobile hybride sort de la portée de détection, par exemple lorsqu'une pièce est équipée d'un ou plusieurs éléments de sol (sol intelligent) tels que l'élément de sol 101, recouvrant la surface au sol de façon discontinue. Ainsi, quand un utilisateur se trouve sur une surface non pourvue d'un élément de sol, l'élément mobile hybride qu'il porte peut quasiment systématiquement se trouver hors de portée des éléments de sol équipant la salle.

L'élément mobile hybride selon l'invention permet avantageusement à l'élément de sol 101 de ne pas perdre toutefois le suivi de la position de cet élément mobile hybride lorsque de telles situations se produisent.

En effet, comme mentionné ci-avant, l'élément mobile hybride comprend une centrale inertielle solidaire du module de localisation, de sorte que le déplacement de ce module de localisation peut être mesuré de manière autonome par la centrale inertielle.

Les moyens de communication de l'élément mobile hybride ne sont pas soumis à la portée de détection de l'élément de sol 101, ce qui permet de transmettre des données de déplacement de la centrale inertielle, à l'élément de sol 101 par ce biais lorsque l'élément mobile hybride est hors de portée.

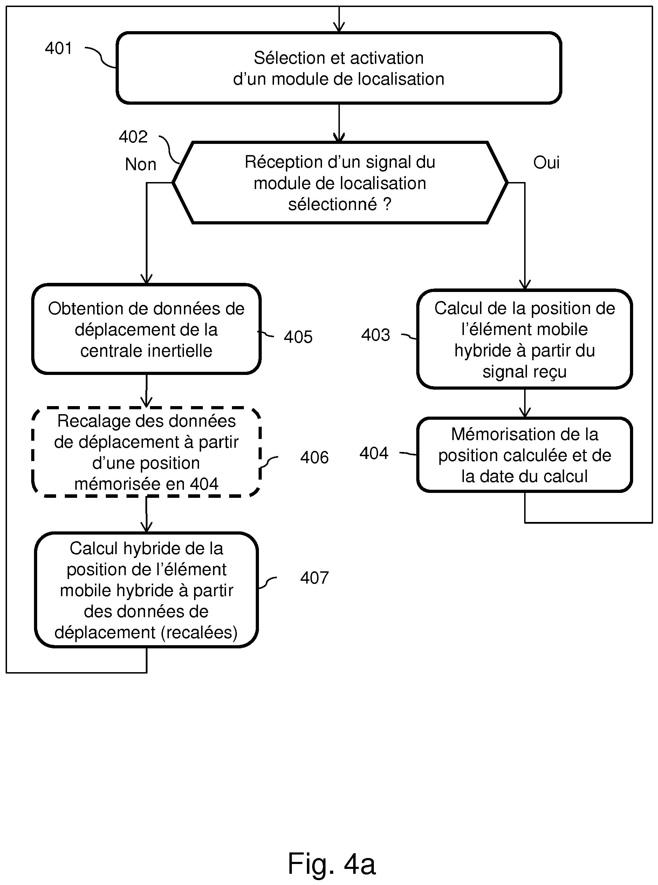

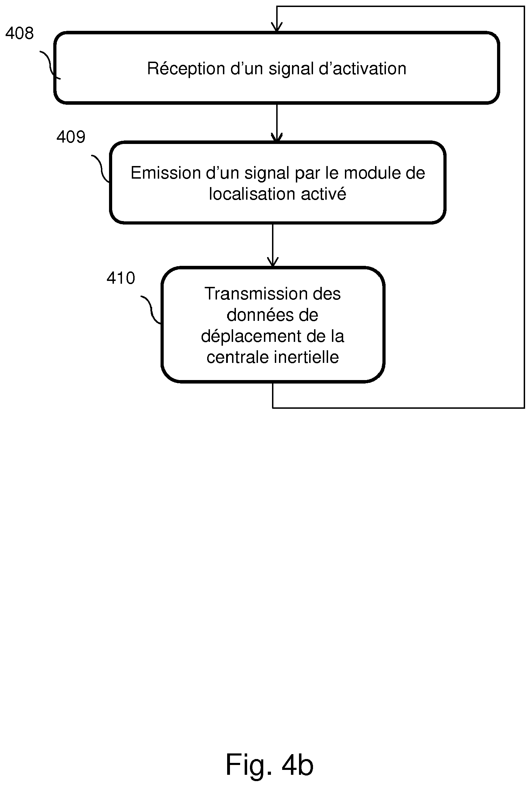

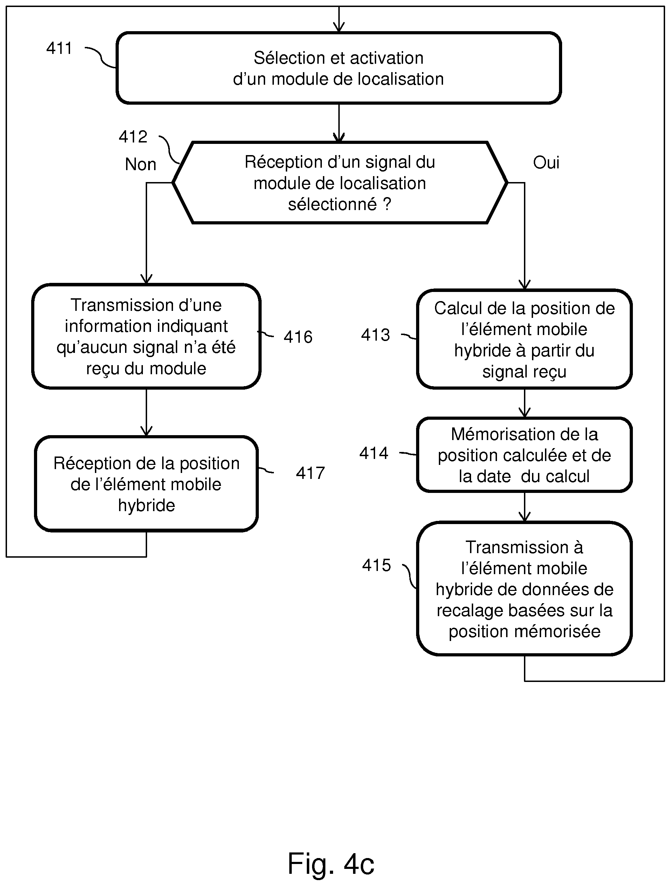

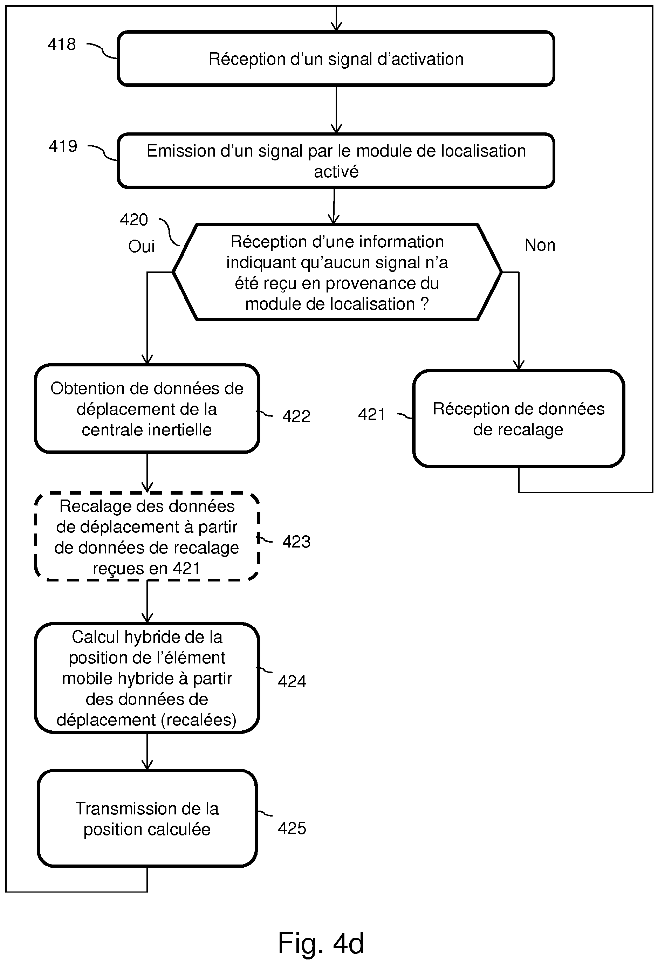

A partir de ces données reçues, l'élément de sol 101 peut calculer la position de l'élément mobile hybride dont le signal électromagnétique émis par le module de localisation activé n'a pas pu être reçu, en mettant en œuvre une étape de calcul hybride basée sur les données reçues, telle que décrite en référence à la figure 4.

En variante, les moyens de communication de l'élément mobile hybride permettent de recevoir, en provenance de l'élément de sol, une information de position précédemment calculée à partir d'un signal émis par le module de localisation à un instant où il était dans la portée de détection de l'élément de sol.

A partir de cette information de position et des données de déplacement de la centrale inertielle, l'élément mobile hybride calcule la position du module de localisation associé, en mettant en œuvre une étape de calcul hybride basée sur les données reçues, telle que décrite en référence à la figure 4.

La **figure 2** illustre un exemple de dispositif d'interfaçage selon un mode particulier de réalisation.

L'élément de sol ou dispositif d'interfaçage comprend une surface de détection 210 ici constituée d'un maillage sous forme de lignes et de colonnes constituant une grille conductrice. Cette dernière comprend un ensemble de boucles conductrices suivant deux axes orthogonaux. Chaque boucle est un capteur permettant de mesurer l'intensité du courant ou la tension induite par un solénoïde (appartenant à un élément mobile hybride dont la position et/ou l'orientation doivent être calculées) qui est positionné sur la surface de détection.

Avantageusement, la surface détection peut être une surface en plastique PET sur laquelle la grille conductrice a été formée par sérigraphie argent. Par exemple, la grille conductrice a été formée par impression utilisant un jet d'encre conductrice contenant des particules d'argent. En variante, la surface détection est par exemple une surface en plastique PET sur laquelle la grille conductrice a été formée avec des pistes en cuivre. Selon une autre possibilité, la grille conductrice est formée par tissage avec un fil conducteur.

En variante, la surface de détection peut être une carte de type PCB (sigle de *Printed Circuit Board* en terminologie anglo-saxonne) de réception électromagnétique, souple ou rigide.

A titre d'illustration, il est admis ici qu'un solénoïde est placé à la position 211, c'est-à-dire à l'intersection des boucles 212 et 213 dont une extrémité est reliée à une masse et l'autre extrémité est reliée aux composants électroniques utilisés pour calculer une position. Lorsque le solénoïde situé à la position 211 est alimenté, il génère un courant inductif dans les boucles 212 et 213 qui peut être analysé et comparé au courant induit dans les autres boucles. Il est ainsi possible, par couplage inductif entre le solénoïde et la grille et par mesure du courant induit, de déterminer la position de solénoïde.

Des multiplexeurs 214 et 215 sont reliés à chaque boucle de chacun des deux axes de la grille, c'est-à-dire ici à chacune des boucles verticales et horizontales, respectivement. Les sorties des multiplexeurs 214 et 215 sont connectées aux contrôleurs automatiques de gain (CAG) 221 et 222, respectivement, à un module 220 du module matériel de l'élément de sol 101.

Les signaux de sortie des contrôleurs automatiques de gain 221 et 222 sont tout d'abord démodulés dans les démodulateurs 223 et 224, respectivement. La démodulation produit un signal continu (DC, sigle de *Direct Current* en terminologie anglo-saxonne) proportionnel à la sinusoïde originale complétée de composantes alternatives (AC, sigle d'*Alternating Current* en terminologie anglo-saxonne) multiples de la fréquence fixe émise par le solénoïde.

Selon un schéma couramment mis en œuvre, le module de calcul, référencé ici 230, du module matériel de l'élément de sol 101, pilote les multiplexeurs 214 et 215 afin d'activer séquentiellement les boucles, c'est-à-dire d'activer une boucle n+1 après une boucle n. Lorsque la dernière boucle est atteinte, le processeur initie un nouveau cycle et pilote l'activation de la première boucle.

Un filtre passe- bande est avantageusement mis en œuvre dans chaque contrôleur automatique de gain 221 et 222 pour supprimer les harmoniques indésirables du signal ainsi que le bruit de fond électromagnétique. Ce filtrage permet d'affiner les mesures des signaux issus des multiplexeurs 214 et 215 qui sont démodulés dans les démodulateurs 223 et 224 puis numérisés dans les convertisseurs analogique/numérique (CAN) 225 et 226, respectivement.

Les valeurs numériques obtenues sont transmises à l'unité centrale de traitement (CPU) 230 du module de calcul pour être mémorisées. Comme illustré, l'unité centrale de traitement 230 contrôle les démodulateurs 223 et 224.

Après que les valeurs aient été mémorisées, l'unité centrale de traitement incrémente l'adresse des multiplexeurs afin de procéder à la numérisation des signaux provenant des boucles suivantes. Lorsqu'une dernière boucle est atteinte, l'unité centrale de traitement réinitialise l'adresse du multiplexeur correspondant à la valeur de la première boucle de l'axe considéré.

A la fin d'un cycle, l'unité centrale de traitement a mémorisé, pour chaque axe, autant de valeurs numériques qu'il y a de boucles adjacentes proches de la position du solénoïde. A partir de ces valeurs, l'unité centrale de traitement calcule la position du solénoïde par interpolation comme décrit ci-après.

Il est observé ici que la mise à la masse des boucles peut être assurée par des bandes de métal positionnées entre les différentes boucles afin de les protéger des interférences électromagnétiques. Une alternative consiste à disposer un plan de masse uniforme sous la grille conductrice.

Par ailleurs, le module 210 comprend ici un émetteur radio 227, commandé par l'unité centrale de traitement 230 du module de calcul, permettant d'activer un module de localisation d'un élément mobile hybride. A titre d'illustration, l'unité centrale de traitement 230 transmet à l'émetteur radio 227 un identifiant d'un module de localisation à activer. Cet identifiant est codé puis transmis sous forme de signal radio numérique ou analogique. Chaque module de localisation recevant ce signal peut alors comparer l'identifiant reçu avec son propre identifiant et s'activer si les identifiants sont identiques.

Le module 220 comprend en outre des moyens de communication 228, par exemple similaires à l'émetteur radio 227. Ces moyens de communication permettent de communiquer avec les éléments mobiles hybrides afin d'obtenir des données de déplacement de centrales inertielles solidaires des modules de localisation, particulièrement utiles lorsque le module de localisation activé est hors de la portée de détection du module 210. Ces moyens de communication permettent également à l'unité centrale 230 d'envoyer à un élément mobile hybride donné une information de position précédemment calculée grâce au signal émis par le module de localisation qu'il intègre, ou encore d'envoyer des données de recalage des données de déplacement de la centrale inertielle. En variante, les moyens de communication 228 peuvent être confondus avec l'élément 227.

Les modules 220 et 230 permettent le calcul en temps réel d'une position hybride tel que décrit précédemment.

Ainsi, pour estimer la position d'un ensemble de module de localisation, il est nécessaire d'effectuer un cycle sur chaque module de localisation et, pour chacun de ces cycles, selon le mode de réalisation décrit ici, un cycle sur chaque ensemble de boucles.

Plusieurs surfaces de détection peuvent être combinées les unes avec les autres, la superficie de la surface de détection résultante étant la somme des superficies des surfaces de détection combinées. A ces fins, une surface de détection est considérée comme maître, les autres étant considérées comme esclaves. L'activation séquentielle des éléments mobiles est gérée par la surface de détection maître qui reçoit, de préférence, les positions calculées par les modules matériels associés à chaque surface de détection esclave et les consolide en élaborant un tableau contenant les coordonnées et angles de liberté des modules de localisation.

La **figure 3** est composée des **figures 3a** et **3b.**

La **figure 3a** illustre schématiquement le principe physique de couplage inductif entre un solénoïde et une boucle conductrice d'une surface de détection.

Chaque élément mobile hybride dont la position et/ou l'orientation doivent être calculées comprend au moins un solénoïde dont l'axe est, de préférence, orientée vers la surface de détection.

Le solénoïde 300 est parcouru par un courant alternatif et émet un champ électromagnétique qui se propage vers la surface de détection, notamment, dans cet exemple, vers la boucle 211. La boucle 211, recevant un champ électromagnétique issu du solénoïde 300, se couple avec le solénoïde 300. Il est alors possible de mesurer un signal alternatif aux bornes de cette boucle, référencées 301.

Le couplage entre le solénoïde 300 et la boucle 211 peut s'exprimer sous la forme de la relation suivante,

$$R = \frac{k}{D^2} E$$

où E désigne la tension aux bornes du solénoïde 300, R désigne la tension du signal reçu aux bornes 301 de la boucle de réception 211, D est la distance entre le solénoïde 300 et la boucle de réception 211 et k est une constante liée à des facteurs intrinsèques du système comprenant le solénoïde et la boucle de réception, notamment le nombre de spires du solénoïde et la taille de la boucle.

La **figure 3b** illustre schématiquement un mécanisme d'interpolation permettant de déterminer la position d'un solénoïde placé sur une surface de détection, selon un axe donné, à partir de mesures obtenues par un système tel que celui décrit en référence à la figure 2. Ce mécanisme peut être mis en œuvre dans l'étape 403 (figure 4) de calcul de la position de l'élément mobile hybride à partir du signal (champ électromagnétique) reçu de son module de localisation.

Il est supposé ici que le solénoïde se situe à proximité de boucles verticales B3, B4 et B5, positionnées selon des abscisses X3, X4 et X5, les tensions mesurées aux bornes de ces boucles étant notées V3, V4 et V5, respectivement. Le solénoïde se trouve ici a une position, en abscisse, notée XS.

Les coordonnées X3, X4 et X5 peuvent être obtenues par l'unité centrale de traitement de l'élément de sol (ou dispositif d'interfaçage) à partir d'un identifiant de la boucle correspondante (ces valeurs sont prédéfinies selon le schéma de routage de la surface de détection et, de préférence, mémorisées dans une mémoire non volatile).

La portion de courbe 302 représentée sur la figure 3b illustre la variation de tension pour la position XS du solénoïde selon les positions des boucles couplées avec le solénoïde, extrapolée à partir des valeurs mesurées par les boucles B3, B4 et B5. Elle peut être assimilée à une fonction du second degré de type parabolique. Cette approximation locale correspond, en pratique, au phénomène de couplage électromagnétique entre un solénoïde et des boucles d'une grille conductrice. Les relations suivantes illustrent cette propriété :

$$V3 = a(X3 - XS)^2 + b$$

$$V4 = a(X4 - XS)^2 + b$$

$$V5 = a(X5 - XS)^2 + b$$

où a et b sont des constantes, a étant une constante inférieure à zéro (a<0).

Par ailleurs, compte tenu de l'hypothèse d'une fonction du second degré, les relations entre les abscisses X3, X4 et X5 peuvent s'exprimer sous la forme suivante :

$$X4 - X3 = X5 - X4 = \Delta X$$

$$X5 - X3 = 2\Delta X$$

ΔX représentant la distance entre les abscisses X3 et X4 et entre les abscisses X4 et X5).

Ainsi, il est possible d'interpoler la position du solénoïde selon la formule suivante :

$$XS = X3 + \frac{\Delta X}{2} \frac{3V3 - 4V4 + V5}{V3 - 2V4 + V5}$$

Il est également possible, selon la même logique, de déterminer la position du solénoïde selon l'axe des ordonnées.

En outre, la distance entre le solénoïde et la boucle (c'est à dire l'altitude du solénoïde par rapport à la surface de détection) peut être définie selon la relation suivante :

$$D = \sqrt{\frac{k}{R} E}$$

La distance D est donc fonction de la valeur R représentant la tension aux bornes des boucles considérées de la surface de détection. Elle peut être extrapolée à partir des mesures réalisées. Il est noté que la précision de ce calcul de distance est notamment liée à la stabilité du signal E émis par le solénoïde dont la valeur doit être aussi constante que possible au cours du temps, ce qui nécessite une alimentation stabilisée dans le module de localisation qui ne doit pas chuter lors de la décharge de la batterie. Ceci peut être assuré par un régulateur de tension du module de localisation.

Les **figures 4a** et **4b** sont des organigrammes représentant des étapes mises en œuvre respectivement par un dispositif d'interfaçage (figure 4a) et un élément mobile hybride (figure 4b) selon un premier mode de réalisation de l'invention.

Les figures 4a et 4b illustrent un premier exemple d'algorithme pouvant être utilisé pour calculer les positions et/ou orientations d'éléments mobiles hybrides.

Dans ce premier exemple, le calcul hybride de la position en cas de défaut de réception d'un signal électromagnétique en provenance du module de localisation sélectionné (c'est-à-dire en l'absence de réception d'un signal électromagnétique lors de l'activation du module de localisation) est mis en œuvre dans le dispositif d'interfaçage, par exemple par une unité centrale de traitement de l'élément de sol 101 représenté sur la figure 1.

On décrit ici les étapes mises en œuvre par le dispositif d'interfaçage selon ce premier mode de réalisation en référence à la figure 4a.

Au cours d'une première étape 401, un module de localisation intégré à un élément mobile hybride est sélectionné et activé par le dispositif d'interfaçage.

En pratique, le dispositif d'interfaçage sélectionne un identifiant de module de localisation parmi une pluralité d'identifiants.

A titre d'illustration, l'unité centrale de traitement 230 du dispositif d'interfaçage transmet à l'émetteur radio 227 du dispositif d'interfaçage un identifiant d'un module de localisation à activer. Cet identifiant est codé afin d'être transmis à l'ensemble des modules de localisation sous forme de signal numérique ou analogique d'activation. Chaque module de localisation recevant ce signal peut alors comparer l'identifiant reçu avec son propre identifiant et s'activer si les identifiants sont identiques. Cette activation consiste par exemple à alimenter le solénoïde 300 du module de localisation sélectionné pour qu'il émette un champ électromagnétique.

Au cours d'une étape 402, un test est réalisé pour savoir si un signal en provenance du module sélectionné est reçu.

En pratique, lorsqu'un module de localisation est sélectionné et activé comme décrit précédemment, il émet un signal, par exemple un champ électromagnétique, à l'attention du dispositif d'interfaçage, en particulier de sa surface de détection 210.

Toutefois, lorsque le module de localisation émet ce champ électromagnétique alors qu'il est hors de la portée de détection de la surface de détection 210 du dispositif d'interfaçage, celui-ci ne peut pas détecter le champ électromagnétique émis et ne peut donc pas calculer la position à partir de celui-ci. L'étape 402 consiste à détecter une telle situation.

Lorsque le champ électromagnétique émis par le module de localisation activé est détecté au cours de l'étape 402, cela signifie que celui-ci est dans la portée de détection de la surface de détection 210 du dispositif d'interfaçage.

Une information de position peut alors être calculée à l'étape 403, à partir du champ électromagnétique reçu, par exemple par interpolation comme décrit en référence à la figure 3b.

Cette information de position est ensuite mémorisée en association avec la date de son calcul dans une mémoire du dispositif d'interfaçage (étape 404). Comme il sera expliqué plus en détails par la suite, cette information de position ainsi que la date associée seront utilisées pour recaler des données de déplacement issues de la centrale inertielle de l'élément mobile hybride sélectionné, préalablement ou au cours du calcul hybride d'une nouvelle information de position à un moment où le calcul de l'information de position selon l'étape 403 n'est pas possible.

Lorsqu'aucun champ électromagnétique n'est détecté par la surface de détection 210 du dispositif d'interfaçage au cours de l'étape 402, cela signifie que le module de localisation sélectionné est hors de portée de la surface de détection 210.

Dans ce cas, des données de déplacement d'une centrale inertielle solidaire du module de localisation sélectionné sont obtenues (étape 405). En pratique, ces données de déplacement sont datées et sont reçues via les moyens de communication 228 (éventuellement confondus avec l'émetteur-récepteur HF 227) du dispositif d'interfaçage. Par exemple, ces données de déplacement sont obtenues sur requête du dispositif d'interfaçage. En variante, l'élément mobile hybride peut transmettre régulièrement des données de déplacement dispositif d'interfaçage, par exemple toutes les secondes ou 100 fois par seconde, selon l'application visée (par exemple réalité augmentée ou virtuelle).

Comme mentionné précédemment, les données de déplacement du module de localisation mesurées par la centrale inertielle solidaire de ce module de localisation comprennent par exemple :

- une (ou plusieurs) vitesse(s) de rotation à un instant donné fournie par un gyromètre ;
- une (ou plusieurs) accélération(s) à un instant donné fournie par un accéléromètre ;
- une (ou plusieurs) estimation(s) de la direction du champ magnétique à un instant donné fournie par un magnétomètre.

Cette liste n'est pas limitative. Ces données de déplacement peuvent être obtenues par différents capteurs.

Au cours d'une étape 406 optionnelle, les données de déplacement obtenues à l'étape 405 sont traitées de sorte à corriger une éventuelle dérive temporelle ou l'effet d'un choc subis par la centrale inertielle. Ce traitement, appelé « recalage », est basé sur une ou plusieurs positions calculées au cours de l'étape 403 à partir d'un signal électromagnétique émis à un instant précédent par le module de localisation sélectionné alors qu'il était dans la portée de la surface de détection 210. Comme mentionné précédemment, une telle position est mémorisée avec sa date de calcul (étape 404). La connaissance de la date du calcul et de la valeur de la position à ce moment précis permet de recaler les données de la centrale inertielle, elles-mêmes datées.

A titre d'illustration, le dispositif d'interfaçage peut suivre, à partir de calcul successifs de la position d'un même module de localisation, l'évolution au cours du temps de sa position et ainsi identifier les moments où ce module de localisation a une vitesse nulle caractérisant un contact sans glissement. Ces moments particuliers (de contact sans glissement) permettent de recaler les positions calculées à partir des données de déplacement de la centrale inertielle, par exemple en réinitialisant la vitesse estimée à zéro.

On remarquera qu'un élément mobile hybride comprenant deux modules de localisation permet d'ores et déjà de corriger la dérive des données de déplacement de la centrale inertielle autour de l'axe vertical de l'élément mobile hybride.

Au cours d'une étape 407, le dispositif d'interfaçage effectue un calcul hybride d'une nouvelle information de position du module de localisation sélectionné. Ce calcul particulier est qualifié d'hybride car il utilise d'une part les données de déplacement de la centrale inertielle obtenues à l'étape 405, éventuellement recalées (si besoin) à l'étape 406, et d'autre part une ou plusieurs information(s) de position précédemment calculée(s) alors que le module de localisation sélectionné était dans la portée de détection (i.e. selon une étape 403).

L'homme du métier comprend que ce calcul hybride (étape 407) prend en compte la date des données de déplacement et celle de l'information de position antérieure, préalablement mémorisée à l'étape 404.

En effet, afin de permettre le calcul hybride cohérent, les données de déplacement reçues de l'élément mobile hybride et les informations de position calculées par le dispositif d'interfaçage sont synchronisées.

Pour ce faire, le dispositif d'interfaçage peut envoyer un top à rythme régulier, en indiquant à quel instant (dans son horloge locale) correspond ce top. Ainsi l'élément mobile hybride est capable de déterminer la date des données qu'il envoie, notamment des données de déplacement de la centrale inertielle, exprimée dans l'horloge locale du dispositif d'interfaçage.

En variante, il est possible d'utiliser un compteur de tops au niveau du dispositif d'interfaçage et d'affecter un numéro de top aux données de déplacement reçues.

Selon une autre possibilité, un protocole de synchronisation d'horloges peut être utilisé, par exemple le protocole NTP (acronyme pour *Network Time Protocol* en terminologie anglo-saxonne) pour synchroniser les horloges de l'élément mobile hybride et du dispositif d'interfaçage.

Ainsi, le calcul hybride 407 permet, en l'absence d'un champ électromagnétique émis par le solénoïde du module de localisation sélectionné, de déterminer une information de position instantanée, à partir d'une ancienne information de position et de données de déplacement.

A titre d'illustration, supposons que les données de déplacement comprennent la vitesse V(T1) de déplacement du module de localisation. Alors, le calcul hybride de la position P(T1) du module de déplacement au temps T1 peut être effectué par application de la formule suivante :

$$P(T1) = P(T0) + V(T1).(T1 - T0)$$

Où P(T1) est la position du module de localisation calculée au temps T1, P(T0) est la position du module de localisation calculée au temps T0 (antérieur à T1), V(T1) est la vitesse du module de localisation au temps T1.

Cet exemple n'est pas limitatif et des calculs plus complexes, par exemple comprenant une ou plusieurs intégrations dans le temps peuvent être mis en œuvre.

Notamment, un tel calcul hybride comprenant éventuellement le recalage susmentionné, peut par exemple se baser sur des algorithmes d'hybridation bien connus de l'homme du métier tel que les filtres de Kalman, de Kalman étendu ou des filtres complémentaires.

Ainsi, l'invention permet d'obtenir en temps réel une information de position d'un module de localisation activé (étape 403 ou étape 407), que l'élément mobile hybride soit ou non dans la portée de détection de la surface de détection, ceci à partir de deux types de données : les données de déplacement de la centrale inertielle solidaire du module de localisation, et les signaux électromagnétiques émis par celui-ci lorsque qu'il est dans la portée de détection de la surface de détection.

Avantageusement, la combinaison de la centrale inertielle avec le module de localisation, constituant des systèmes différents aux caractéristiques complémentaires, permet de pallier les insuffisances de chacun d'eux. Par exemple, le calcul de la position du module de localisation à partir de signaux électromagnétiques qu'il émet (étape 403), est précis et ne souffre pas de problème de dérive dans le temps, mais ce calcul est subordonné à la portée de détection limitée de la surface de détection 210.

La centrale inertielle quant à elle constitue un autre moyen de positionnement basé sur des principes physiques différents, à savoir l'inertie, dont les mesures sont autonomes et fiables. Les problèmes de dérive dans le temps ou l'effet de chocs subis par la centrale inertielle peuvent être solutionnés par l'utilisation d'anciennes positions calculées au cours d'étapes 403.

De manière correspondante, et comme représenté sur la figure 4b, l'élément mobile hybride reçoit un signal d'activation (étape 408) envoyé par le dispositif d'interfaçage à l'étape 401.

A titre d'illustration, le récepteur radio 602 de l'élément mobile hybride représenté sur la figure 6 reçoit une commande d'activation comprenant un identifiant de module de localisation sous forme codée. L'élément mobile hybride recevant ce signal peut alors comparer l'identifiant reçu avec l'identifiant de son ou ses modules de localisation et activer celui-ci si les identifiants sont identiques. Cette activation consiste par exemple à alimenter le solénoïde 300 du module de localisation sélectionné pour qu'il émette un champ électromagnétique.

Au cours d'une étape 409, le module de localisation ainsi activé émet un signal, par exemple un champ électromagnétique. Toutefois, même si un tel signal est émis, il n'est pas nécessairement reçu par le dispositif d'interfaçage. Notamment, si le module de localisation est hors de portée de la surface de détection 210, alors le signal électromagnétique est émis mais n'est pas perçu par la surface de détection 210.

Au cours d'une étape 410, l'élément mobile hybride transmet des données de déplacement de la centrale inertielle, lesquelles sont reçues par le dispositif d'interfaçage au cours de l'étape 405.

En pratique, comme représenté sur la figure 6, ces données de déplacement sont générées par les capteurs de la centrale inertielle 607 et sont récupérées (et datées) par l'unité de traitement 609 de l'élément mobile hybride afin d'être envoyées via les moyens de communication 608 (éventuellement confondus avec l'émetteur-récepteur 602). La date potentiellement affectée aux données de déplacement a pour but de permettre la synchronisation de ces dernières avec les positions mémorisées dans le dispositif d'interfaçage à l'étape 404. Comme mentionné précédemment, cette synchronisation est permise soit par une datation des données de déplacement au niveau de l'élément hybride, dans l'horloge du dispositif d'interfaçage avant envoi (envoi de tops à rythme régulier et de dates correspondantes dans le référentiel de l'horloge du dispositif d'interfaçage, utilisation de protocole de synchronisation d'horloges par exemple NTP), soit au niveau du dispositif d'interfaçage (compteur de tops).

Cette étape 410 peut être effectuée sur requête du dispositif d'interfaçage ou bien régulièrement, par exemple toutes les secondes ou 100 fois par seconde, selon l'application visée (par exemple réalité augmentée ou virtuelle).

Les **figures 4c** et **4d** sont des organigrammes représentant des étapes mises en œuvre respectivement par un dispositif d'interfaçage (figure 4c) et un élément mobile hybride (figure 4d) selon un second mode de réalisation de l'invention.

Les figures 4c et 4d illustrent un second exemple d'algorithme pouvant être utilisé pour calculer les positions et/ou orientations d'éléments mobiles hybrides.

Dans ce second exemple, le calcul hybride de la position en cas de défaut de réception d'un signal électromagnétique en provenance du module de localisation sélectionné (c'est-à-dire en l'absence de réception d'un signal électromagnétique lors de l'activation du module de localisation) est mis en œuvre dans l'élément mobile hybride sélectionné et activé par dispositif d'interfaçage, par exemple par l'unité de traitement 609 représentée sur la figure 6 et chargée du traitement des données issues de la centrale inertielle ou du module de localisation associé.

On décrit ici les étapes mises en œuvre par le dispositif d'interfaçage selon ce second mode de réalisation en référence à la figure 4c.

Au cours d'une première étape 411, similaire à l'étape 401 de la figure 4a, un module de localisation intégré à un élément mobile hybride est sélectionné et activé par le dispositif d'interfaçage.

Au cours d'une étape 412, similaire à l'étape 402 de la figure 4a, un test est réalisé pour savoir si un signal en provenance du module sélectionné est reçu.

En pratique, lorsqu'un module de localisation est sélectionné et activé comme décrit précédemment, il émet un signal, par exemple un champ électromagnétique, à l'attention du dispositif d'interfaçage, en particulier de sa surface de détection 210.

Toutefois, lorsque le module de localisation émet ce champ électromagnétique alors qu'il est hors de la portée de détection de la surface de détection 210 du dispositif d'interfaçage, celui-ci ne peut pas détecter le champ électromagnétique émis et ne peut donc pas calculer la position à partir de celui-ci. L'étape 412 consiste à détecter une telle situation.

Lorsque le champ électromagnétique émis par le module de localisation activé est détecté au cours de l'étape 412, cela signifie que celui-ci est dans la portée de détection de la surface de détection 210 du dispositif d'interfaçage.

Une information de position peut alors être calculée à l'étape 413, similaire à l'étape 403 de la figure 4a, à partir du champ électromagnétique reçu, par exemple par interpolation comme décrit en référence à la figure 3b.

Cette information de position est ensuite mémorisée en association avec la date de son calcul dans une mémoire du dispositif d'interfaçage (étape 414 similaire à l'étape 404 de la figure 4a).

Comme il sera expliqué plus en détails par la suite, cette information de position ainsi que la date associée seront utilisées par l'élément mobile hybride pour recaler des données de déplacement issues de la centrale inertielle, préalablement ou au cours du calcul hybride d'une nouvelle information de position à un moment où le calcul de l'information de position par le dispositif d'interfaçage selon l'étape 413 n'est pas possible.

Pour ce faire, le dispositif d'interfaçage transmet des données de recalage basées sur la position calculée à l'étape 413 et mémorisée avec sa date à l'étape 414. Selon un mode de réalisation particulier, ces données de recalage comprennent directement cette position ainsi que sa date. Selon un autre mode de réalisation particulier, les données de recalage peuvent par exemple comprendre une instruction de réinitialisation des capteurs de la centrale inertielle, de sorte que les prochaines données de déplacement mesurées par celle-ci seront représentatives d'un déplacement du module de localisation par rapport à sa position telle que calculée à l'étape 413. Les données de recalage peuvent comprendre en variante d'autres informations basées sur une ou plusieurs positions calculées par le dispositif d'interfaçage, par exemple une vitesse ou une accélération à un moment donné.

Lorsqu'aucun champ électromagnétique n'est détecté par la surface de détection 210 du dispositif d'interfaçage au cours de l'étape 412, cela signifie que le module de localisation sélectionné est hors de portée de la surface de détection 210.

Dans ce cas, le dispositif d'interfaçage en informe l'élément mobile hybride comprenant le module de localisation correspondant, au cours d'une étape 416. En pratique, cette information est envoyée via les moyens de communication 228 (éventuellement confondus avec l'émetteur-récepteur HF 227) commandés par l'unité de traitement 230 du dispositif d'interfaçage.

Cette information peut être directement la dernière position calculée par le dispositif d'interfaçage à partir d'un signal électromagnétique.

A noter que dans certains modes de réalisation dans lesquels les données de recalage envoyées à l'étape 415 comprennent directement la position ou permettent de déduire cette position, l'élément mobile hybride est d'ores-et-déjà en possession de cette information de position. Ainsi, l'information envoyée à l'étape 416 peut consister simplement en une instruction de déclenchement du calcul hybride.

Au cours d'une étape 417, le dispositif d'interfaçage reçoit la position de l'élément mobile hybride, laquelle, dans ce mode de réalisation, est calculée par l'élément mobile hybride, comme cela sera décrit plus en détail en référence à la figure 4d qui représente les étapes mises en œuvre au niveau de l'élément mobile hybride dans ce second mode de réalisation.

Ainsi, l'invention permet d'obtenir en temps réel une information de position d'un module de localisation activé (étape 413 ou étape 417), que l'élément mobile hybride soit ou non dans la portée de détection de la surface de détection, ceci à partir de deux types de données : les données de déplacement de la centrale inertielle solidaire du module de localisation, et les signaux électromagnétiques émis par celui-ci lorsque qu'il est dans la portée de détection de la surface de détection.

De manière correspondante, et comme représenté sur la figure 4d, l'élément mobile hybride reçoit un signal d'activation (étape 418 similaire à l'étape 408 de la figure 4b) envoyé par le dispositif d'interfaçage à l'étape 411.

Au cours d'une étape 419, similaire à l'étape 409 de la figure 4b, le module de localisation ainsi activé émet un signal, par exemple un champ électromagnétique. Il est rappelé que même si un tel signal est émis, il n'est pas nécessairement reçu par le dispositif d'interfaçage. Notamment, si le module de localisation est hors de portée de la surface de détection 210, alors le signal électromagnétique est émis mais n'est pas perçu par la surface de détection 210.

Au cours d'une étape 420, un test est réalisé pour savoir si une information en provenance du dispositif d'interfaçage est reçue, indiquant que celui-ci n'a pas reçu le signal électromagnétique attendu. Comme expliqué précédemment, cette situation se présente lorsque le module de localisation émettant ce signal à l'étape 419 est situé hors de portée de la surface de détection 210.

Lorsqu'aucune information de ce type n'est reçue après un certain temps prédéterminé, par exemple égal à la durée entre deux tops d'horloge de l'élément mobile hybride, cela signifie que le signal électromagnétique émis par le module de localisation à l'étape 419 a bien été reçu (celui-ci est alors situé dans la portée de la surface de détection 210) par le dispositif d'interfaçage et qu'une information de position peut être calculée par celui-ci à partir de ce signal (étape 413 de la figure 4c).

Au cours d'une étape 421, l'élément mobile hybride reçoit des données de recalage envoyées par le dispositif d'interfaçage (étape 415 de la figure 4c). Pour rappel, ces données de recalage sont calculées par le dispositif d'interfaçage à partir de la position calculée grâce au signal électromagnétique reçu en provenance du module de localisation activé.

Lorsqu'au contraire l'élément mobile hybride reçoit une information indiquant qu'aucun signal n'a été reçu de la part du module de localisation activé, cela signifie que le signal électromagnétique émis par le module de localisation à l'étape 419 n'a pas atteint la surface de détection 210 et que le module de localisation est situé hors de portée de la surface de détection 210.

Dans ce cas, l'élément mobile hybride récupère les données de déplacement de la centrale inertielle ainsi que leur date (étape 422), par exemple dans une mémoire associée à celle-ci. En pratique, comme représenté sur la figure 6, c'est l'unité de traitement 609 qui obtient les données de déplacement de la centrale inertielle 607.

Au cours d'une étape 423, similaire à l'étape 406 de la figure 4a à ceci près qu'elle est basée sur les données de recalage reçues en 421, les données de déplacement obtenues à l'étape 422 sont traitées par l'élément mobile hybride de sorte à corriger une éventuelle dérive temporelle ou l'effet d'un choc subis par la centrale inertielle.

Ce traitement de recalage est basé sur une ou plusieurs positions calculées par le dispositif d'interfaçage à partir d'un signal électromagnétique émis à un instant précédent par le module de localisation sélectionné alors qu'il était dans la portée de la surface de détection 210. Comme mentionné précédemment, une telle position est typiquement reçue sous forme de données de recalage avec la date associée. Selon une variante de réalisation, une position calculée par le dispositif d'interfaçage peut être reçue en tant qu'information en 420. La connaissance de la date du calcul de la position reçue et de la valeur de la position à ce moment précis permet de recaler les données de la centrale inertielle, elles-mêmes datées, comme expliqué en référence à l'étape 406 de la figure 4a.

Au cours d'une étape 424, similaire à l'étape 407 de la figure 4a, l'élément mobile hybride effectue un calcul hybride d'une nouvelle information de position du module de localisation sélectionné. Il est rappelé que ce calcul particulier est qualifié d'hybride car il utilise d'une part les données de déplacement de la centrale inertielle recalées à l'étape 423, et d'autre part une ou plusieurs information(s) de position précédemment calculée(s) (par exemple reçues comme données de recalage à l'étape 421) par le dispositif d'interfaçage alors que le module de localisation sélectionné était dans la portée de détection (i.e. selon une étape 413 de la figure 4c). Des détails sur le calcul hybride ont été donnés précédemment en référence à l'étape 407 de la figure 4a (premier mode de réalisation), ils ne seront pas répétés ici.

Il est rappelé toutefois qu'un tel calcul hybride (ainsi que le recalage) peut par exemple se baser sur des algorithmes d'hybridation bien connus de l'homme du métier tel que les filtres de Kalman, de Kalman étendu ou des filtres complémentaires.

Ainsi, dans ce second mode de réalisation également, le calcul hybride 424 permet, en l'absence d'un champ électromagnétique émis par le module de localisation sélectionné, de déterminer une information de position instantanée, à partir d'une ancienne information de position et de données de déplacement.

Enfin, l'élément mobile hybride transmet la position ainsi calculée au dispositif d'interfaçage au cours d'une étape 425. Ainsi, le dispositif d'interfaçage obtient une information de position bien qu'il n'ait pas pu la calculer lui-même en l'absence de détection du champ électromagnétique émis par module de localisation.

Les **figures 5a** et **5b** illustrent schématiquement deux exemples d'éléments mobiles hybrides dont la position peut être déterminée et dont la position et l'orientation peuvent être déterminées, respectivement, conformément à des modes particuliers de réalisation de l'invention.

L'élément mobile hybride 500 représenté sur la figure 5a comprend un seul module de localisation 501. Comme illustré, le module de localisation comprend un solénoïde. L'axe radial du solénoïde est avantageusement perpendiculaire au plan de l'élément de sol afin que le rayonnement électromagnétique du solénoïde se propage de façon optimale vers cette surface.

Cet élément mobile hybride 500 comprend en outre une centrale inertielle 502 solidaire du module de localisation 401, ainsi que des moyens de communication 503 pour envoyer des données relatives au déplacement de la centrale inertielle 502.

La position tridimensionnelle de l'élément mobile hybride 500, comprenant un seul solénoïde, peut être calculée conformément à l'invention, comme décrit précédemment. En effet, à partir des données de déplacement de la centrale inertielle solidaire 502 et/ou à partir du signal émis par le solénoïde du module de localisation 501, il est possible de calculer la position hybride à tout instant. Lorsque plusieurs éléments mobiles sont présents sur la surface de détection 210, la position de chaque élément mobile hybride est déterminée de façon séquentielle.

L'élément mobile hybride 500' représenté sur la figure 5b comprend deux modules indépendants de localisation 501-1 et 501-2. A nouveau, comme illustré, l'axe radial des solénoïdes est avantageusement perpendiculaire au plan de la surface de détection afin que le rayonnement électromagnétique du solénoïde se propage de façon optimale vers cette surface.

Cet élément mobile hybride 500' comprend en outre une centrale inertielle 502' solidaire des modules de localisation 501-1 et 501-2, ainsi que des moyens de communication 503' pour envoyer des données relatives au déplacement de la centrale inertielle 502'.

Chaque solénoïde 501-1 et 501-2 de l'élément mobile hybride 500' peut être activé indépendamment l'un de l'autre, de façon séquentielle. Ainsi, il est possible de déterminer la position de l'élément mobile hybride 500' en déterminant la position de chaque solénoïde des modules de localisation 501-1 et 501-2 et en connaissant leur position dans l'élément mobile hybride 500'. De même, il est possible de connaître l'orientation de cet élément mobile hybride à partir des positions relatives des solénoïdes des modules de localisation 501-1 et 501-2 et de leur position dans l'élément mobile hybride 500'. Il convient d'observer ici que l'utilisation des coordonnées des solénoïdes des modules de localisation 501-1 et 501-2, dans le plan de la surface de détection, permet de déterminer l'orientation de l'élément mobile hybride 500' dans ce plan tandis que l'utilisation de l'altitude des solénoïdes des modules de localisation 501-1 et 501-2 permet de calculer le tangage de l'élément mobile hybride 500'.

La position tridimensionnelle et l'orientation de l'élément mobile hybride 500', comprenant deux solénoïdes, peuvent être calculées conformément à l'invention, comme décrit précédemment. En effet, à partir des données de déplacement de la centrale inertielle 502' et/ou à partir des signaux émis séquentiellement par les solénoïdes des modules de localisation 501-1 et 501-2, il est possible de calculer la position hybride à tout instant. Lorsque plusieurs éléments mobiles sont présents sur la surface de détection 210, la position de chaque élément mobile hybride est déterminée de façon séquentielle.

Il est noté ici que des éléments mobiles hybrides comprenant un seul solénoïde et comprenant deux solénoïdes peuvent être utilisés conjointement sur une surface de détection à condition que l'intelligence de celle-ci soit capable d'activer chaque solénoïde indépendamment des autres.

La capture de l'orientation d'éléments mobiles hybrides peut donc être obtenue en dotant chaque élément mobile hybride d'au moins deux modules de localisation (ne devant pas être alignés selon une perpendiculaire à la surface de détection) et en définissant une règle d'identification de ces modules de localisation.

L'activation séquentielle de modules de localisation, par l'élément de sol, permet d'estimer la position et/ou l'orientation d'une pluralité d'éléments mobiles hybrides pourvus de ces modules de localisation.

Lorsqu'un module de localisation reçoit une commande d'activation qui lui est dédiée, il déclenche une émission électromagnétique. Le système de détection, connaissant l'identification du module de localisation en cours d'émission, peut alors lier les informations de position calculées à l'identifiant du module de localisation.

Il est ainsi possible de construire un tableau contenant, pour chaque élément mobile hybride, un identifiant, une abscisse, une ordonnée et, de préférence, une altitude dans un repère de la surface de détection.

L'activation séquentielle de l'émission électromagnétique des modules de localisation permet l'utilisation d'une unique fréquence d'émission pour l'ensemble des éléments mobiles hybrides gérés par le système.

La **figure 6** illustre schématiquement des blocs logiques d'un élément mobile hybride dont la position peut être déterminée à partir d'un dispositif d'interfaçage (ou élément de sol) tel qu'illustré sur la figure 2.

Un tel élément mobile hybride est, de préférence, autonome tant en ce qui concerne son alimentation électrique que la réception de signaux de commande d'émission électromagnétique.

Dans cet exemple, on considère un élément mobile hybride comprenant un unique module de localisation, comme sur la figure 5a. L'homme du métier pourra sans difficulté adapter le présent enseignement à un élément mobile hybride comprenant deux ou plus de modules de localisation (comme représenté sur la figure 5b).

L'élément mobile hybride comprend ainsi un module d'alimentation électrique 601 fournissant une tension pour l'ensemble des composants du module de localisation ainsi qu'un module de réception et détection de commande 602 qui reçoit et démodule un signal, par exemple un signal HF, émis par un module externe de l'élément de sol, pour déterminer si le signal reçu vise l'activation de ce module de localisation. Comme décrit précédemment, une telle détection peut être réalisée par la comparaison d'un identifiant reçu avec un identifiant préalablement mémorisé.

L'élément mobile hybride 600 comprend en outre un commutateur 603, commandé par le module de réception et détection de commande 602, ainsi qu'un amplificateur sélectif 604 commandé par le commutateur 603. Enfin, l'élément mobile hybride 600 comprend un oscillateur local 605 générant une fréquence, de préférence, fixe, stable et de type carré et un solénoïde 606.

L'élément mobile hybride 600 comprend également une centrale inertielle 607 et des moyens de communication 608 avec les moyens de communication 228 de l'élément de sol 101. En variante, les moyens de communication 608 pourraient être rattachés ou confondus avec le récepteur HF 602 et communiquer avec l'émetteur HF 227 de l'élément de sol.

L'élément mobile hybride comprend une unité de traitement 609 configurée pour récupérer les données de déplacement brutes de la centrale inertielle 607, les mémoriser dans une mémoire de l'élément mobile hybride (non représentée) et pour commander leur envoi via les moyens de communication 608.

Dans certains modes de réalisation, comme par exemple celui décrit en référence aux figures 4c et 4d, l'unité de traitement 609 est configurée pour mettre en œuvre des calculs hybride d'informations de position tels que décrits précédemment.

En variante, la centrale inertielle 607 peut intégrer une telle intelligence, c'est-à-dire intégrer l'unité de traitement 609.

L'amplificateur sélectif 604 génère, selon la position du commutateur 603 et à partir du signal issu de l'oscillateur local 605, une tension sinusoïdale aux bornes du solénoïde 606, permettant au solénoïde 606 de générer une certaine puissance de rayonnement.

Plusieurs types d'alimentation électrique 601 peuvent être utilisés. L'alimentation peut être obtenue à partir d'une batterie rechargeable et un circuit de contrôle standard. Elle peut également être obtenue à partir d'une batterie et d'un régulateur de tension permettant d'obtenir une tension constante durant toute une plage d'utilisation de la batterie. Cette solution est particulièrement avantageuse lorsque le système doit calculer l'altitude d'éléments mobiles hybrides mis en œuvre.

L'alimentation peut également être fournie de façon indirecte, par télé-alimentation couplée avec l'utilisation de moyens de stockage d'énergie.

Selon ce mode de réalisation, une couche de solénoïdes rayonnants dédiés est placée sous la surface de détection. Ces solénoïdes sont parcourus par un signal sinusoïdal et la puissance émise par chaque solénoïde est suffisante pour télé-alimenter les modules de localisation positionnés au-dessus de lui. Les modules de localisation sont également équipés d'un solénoïde pour la réception, par induction, du signal émis par les solénoïdes présents sous la surface de détection. D'autres moyens de télé-alimentation peuvent être utilisés, par exemple des antennes utilisant la technologie Powercast (Powercast est une marque).

Les moyens de stockage d'énergie comprennent par exemple un condensateur de forte capacité qui est chargé à partir du solénoïde du module de localisation. Le condensateur est utilisé comme source de tension pour alimenter les autres modules.

Alternativement, les moyens de stockage d'énergie comprennent une batterie présente dans l'élément mobile hybride, par exemple une batterie au lithium. Le solénoïde du module de localisation recharge alors constamment cette batterie dès qu'il est parcouru par un courant induit. Un circuit de protection de charge/décharge est avantageusement associé à la batterie pour qu'elle reste dans sa plage de tensions acceptables. Si l'altitude d'éléments mobiles doit être évaluée, la source de tension est, de préférence, régulée pour que la tension d'alimentation soit constante durant une durée d'utilisation de cette source de tension, c'est-à-dire durant une estimation de position et/ou d'orientation de l'élément mobile hybride.

Les éléments mobiles hybrides situés sur une surface de détection et utilisés conjointement peuvent utiliser des types d'alimentation différents.

Par ailleurs, lorsqu'un élément mobile hybride comprend plus d'un module de localisation, certains composants, notamment l'alimentation électrique, peuvent être communs à certains ou à tous les modules de localisation.

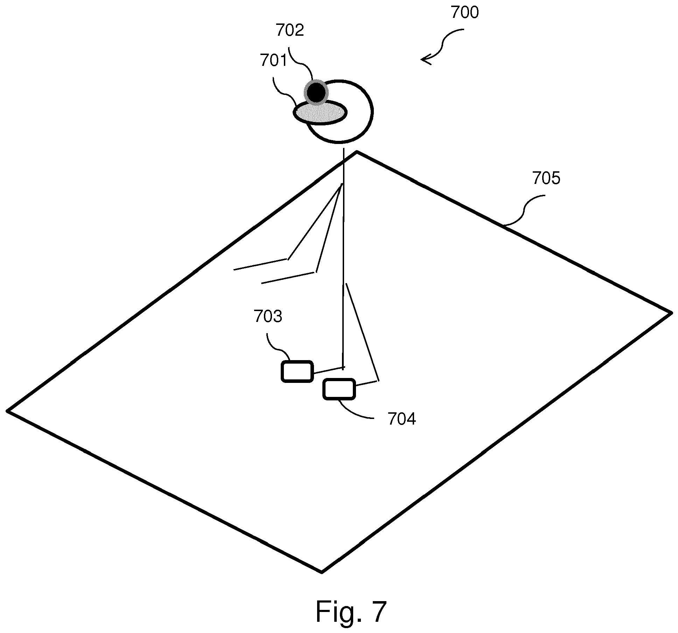

La **figure 7** illustre un exemple d'application dans laquelle des éléments mobiles hybrides selon l'invention peuvent être avantageusement utilisés.

Dans un environnement 700, l'utilisateur est équipé d'un système de réalité augmenté ou réalité virtuelle comprenant un casque 701, par exemple de type HMD (sigle de *Head-Mounted Display* en terminologie anglo-saxonne).

Ce système comprend par exemple une centrale inertielle 702 solidaire du casque 701 et intégrant par exemple un ou plusieurs magnétomètres, accéléromètres, gyromètres. Ainsi, les données de déplacement issues de la centrale inertielle 702 permettent de décrire le déplacement du casque 701 selon plusieurs degrés de liberté, par exemple six degrés de liberté.

Dans cet exemple, l'utilisateur est équipé à chaque pied d'un élément mobile hybride 703 et 704 tel que décrit précédemment et se déplace sur un élément de sol 705 similaire à l'élément de sol 101 décrit précédemment. Il est ici rappelé que l'invention n'est toutefois pas limitée à un dispositif d'interfaçage localisé au sol, mais qu'elle couvre également des cas où le dispositif d'interfaçage est disposé sur des murs latéraux ou au plafond.

Ainsi, par application des méthodes décrites précédemment, il est possible de suivre la position des deux pieds de l'utilisateur dans le repère de l'élément de sol 705.

Avantageusement, les données de position ainsi obtenues permettent de recaler la centrale inertielle 702 localisée au niveau du casque 701.

Par exemple, en supposant que l'utilisateur se déplace de manière à ce que la distance D entre le casque 701 et l'élément de sol 705 est constante, alors la centrale inertielle 702 peut être recalée à l'aide des informations de position calculées au niveau des pieds de l'utilisateur, la composante dans la direction perpendiculaire au plan de l'élément de sol étant translatée de la distance D.

En variante, il est possible de placer un moyen de mesure de l'altitude (baromètre ou télémètre) au niveau du casque 701. Ceci permet de recaler les données de la centrale inertielle 702, même si l'altitude (distance D) varie dans le temps.

Le recalage de la centrale inertielle 702 peut aussi se faire plus précisément si on implémente un modèle de cinématique inverse lié au corps humain.

Il est rappelé que la cinématique inverse permet par exemple, pour un modèle humain, de déterminer la torsion de la colonne vertébrale, des chevilles, des genoux, du cou, ou de tout autre articulation du corps humain, à partir des trajectoires ou des positions des mains ou des pieds. Plutôt que de spécifier manuellement un ensemble de coordonnées articulaires, un modèle de cinématique inverse permet de formuler un mouvement du squelette à partir de ses composants significatifs, par exemple la trajectoire respective des mains ou des pieds, l'orientation du bassin.

Lorsqu'il tel modèle de cinématique inverse est utilisé, la connaissance des données de position des pieds par les éléments mobiles hybrides 703 et 704 ainsi que les données issues de la centrale inertielle 702 permet de calculer la position des différentes parties qui composent le corps humain (jambes, colonne vertébrale, cou, tête). On obtient ainsi une position plus précise de l'élément 702 par rapport aux éléments 703 et 704 grâce à ce modèle de cinématique inverse.

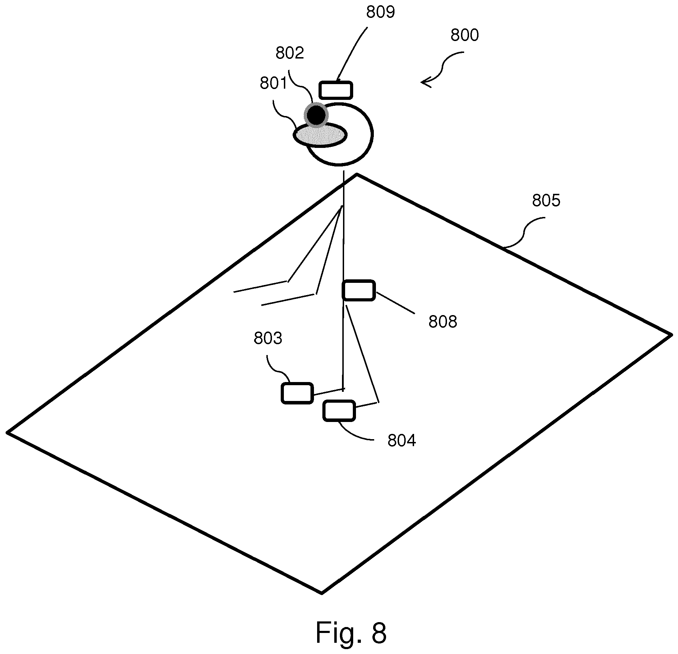

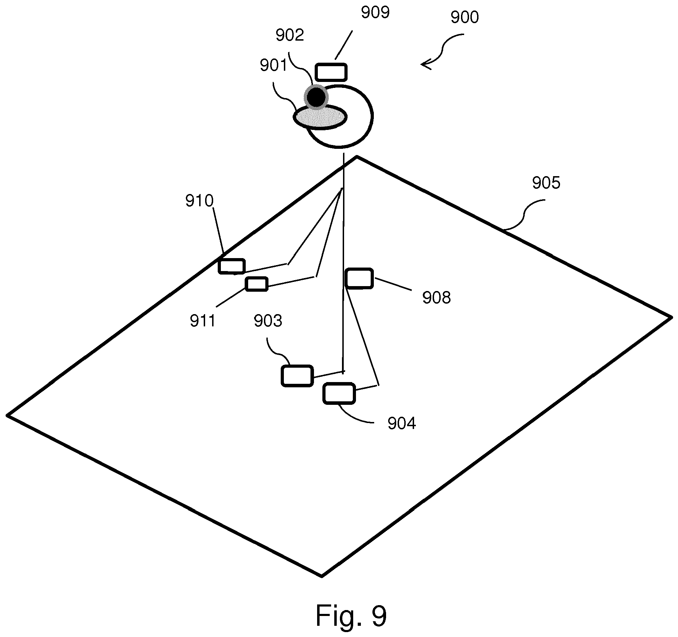

Les **figures 8** et **9** illustrent des variantes de réalisation de la figure 7, selon lesquelles il est possible de calculer plus précisément la position des différentes parties du corps humain de l'utilisateur. Bien entendu, l'invention peut aussi avantageusement s'appliquer à la localisation précise des différents membres d'un robot ou de tout autre objet complexe, par exemple articulé.

Dans les exemples représentés sur les figures 8 et 9, l'utilisateur se déplace dans un environnement 800 (figure 8), respectivement 900 (figure 9). Il est équipé d'un système de réalité augmenté ou réalité virtuelle comprenant un casque 801 (figure 8), respectivement 901 (figure 9), similaires à 701 (figure 7). Il s'agit par exemple d'un casque de type HMD (sigle de *Head-Mounted Display* en terminologie anglo-saxonne).

Egalement, le système comprend une centrale inertielle 802 (figure 8), respectivement 902 (figure 9), similaires à 702 (figure 7), solidaire du casque 801, respectivement 901. La centrale inertielle intègre par exemple un ou plusieurs magnétomètres, accéléromètres, gyromètres.

Ainsi, les données de déplacement issues de la centrale inertielle 802, respectivement 902 permettent de décrire le déplacement du casque 801, respectivement 901 selon plusieurs degrés de liberté, par exemple six degrés de liberté.

L'utilisateur est en outre équipé à chaque pied d'un élément mobile hybride 803 et 804 (figure 8), respectivement 903 et 904 (figure 9) similaires à 703 et 704 (figure 7) et se déplace sur un élément de sol 805 (figure 8), respectivement 905 (figure 9), similaires à 705 (figure 7).

Dans l'exemple de la **figure 8,** l'utilisateur est en plus équipé à la ceinture d'une autre centrale inertielle 808, et sur le casque 801, d'un moyen 809 de mesure de l'altitude du casque 801 comme par exemple un télémètre ou un baromètre.

Un télémètre visant vers le haut permet par exemple de mesurer la distance de la tête de l'utilisateur par rapport au plafond et au final de calculer l'altitude de la tête de l'utilisateur par la connaissance de la distance sol / plafond. Un baromètre permet quant à lui de mesurer l'altitude à partir de la pression de l'air.

Avantageusement, par application des méthodes décrites précédemment, il est possible de suivre la position des deux pieds de l'utilisateur équipés des éléments mobiles hybrides 803, 804, dans le repère de l'élément de sol 805.

La connaissance de l'altitude la tête de l'utilisateur grâce au moyen 809 permet de connaitre la position du casque même si la distance D entre le casque 801 et l'élément de sol 805 varie en temps réel, ce qui arrive par exemple lorsque l'utilisateur se baisse ou saute par rapport à l'élément de surface 805.

Les données issues de la centrale inertielle 802 peuvent être recalées à l'aide des informations de position calculées au niveau des pieds de l'utilisateur, la composante dans la direction perpendiculaire au plan de l'élément de sol étant translatée de la distance D qui varie dynamiquement.

Le recalage de la centrale inertielle 802 peut aussi se faire plus précisément si on implémente un modèle de cinématique inverse lié au corps humain. Dans ce cas, la connaissance des données de position des pieds par les éléments mobiles hybrides 803 et 804 ainsi que les données issues de la centrale inertielle 802 permettent de calculer la position des différentes parties qui composent le corps humain (jambes, colonne vertébrale, cou, tête), étant entendu que les différents éléments 801 à 804, 808 et 809 sont capables de communiquer ensemble.

Ainsi, la centrale inertielle 808 permet d'obtenir un modèle de cinématique inverse encore plus précis, puisqu'il permet d'obtenir des données de position du milieu du corps et augmente donc la précision du modèle de cinématique inverse.

Dans l'exemple de la **figure 9,** l'utilisateur est équipé d'un système magnétique (champs magnétiques constants ou puisés) constitué d'un émetteur magnétique 908 émettant un champ magnétique dans une pluralité de directions (préférentiellement dans trois directions perpendiculaires) ainsi que d'une pluralité de récepteurs (capteurs) magnétiques 909, 910 et 911. Par exemple, un tel système est connu sous le nom de Polhemus Fastrak (Polhemus Fastrak est une marque) et Razer Hydra (Razer Hydra est une marque).

L'émetteur comprend par exemple trois solénoïdes émettant chacun un champ magnétique dans des directions orthogonales.

Comme représenté sur la figure 9, l'émetteur 908 est par exemple localisé au niveau de la ceinture de l'utilisateur. Le récepteur 909 est localisé au niveau de la tête de l'utilisateur, par exemple sur le casque 901. Les récepteurs 910 et 911 (qui sont par exemple des manettes) sont localisés dans les mains de l'utilisateur. Dans son principe, le système magnétique (constitué des éléments 908 à 911) permet d'obtenir les coordonnées de chaque récepteur 909, 910 et 911, dans le repère de l'émetteur 908, ceci de manière fiable et déterministe.

Les différents éléments 901 (casque), 903 (élément mobile hybride), 904 (élément mobile hybride) et 908 (émetteur magnétique) communiquent ensemble.

La position de l'émetteur 908 par rapport aux pieds équipés des éléments mobiles hybrides 903 et 904 peut être obtenue en faisant l'hypothèse que la distance D entre l'émetteur 908 et l'élément de sol 905 est constante. Ainsi la composante de la position de l'émetteur 908 dans la direction perpendiculaire au plan de l'élément de sol 905 peut être obtenue par une simple d'une translation de la distance D.

Selon une variante, il est possible de placer un télémètre ou un baromètre (similaires à 809 sur la figure 8) au niveau de l'émetteur 908, afin de mesurer une altitude dynamique, c'est-à-dire une distance D variable entre l'émetteur 908 et l'élément de sol 905. Ceci est notamment avantageux pour les cas où l'utilisateur saute ou se baisse par rapport à l'élément de sol 905.

Ainsi, des méthodes selon l'invention permettent de calculer la position de l'émetteur 908 dans le repère de l'élément de sol 905.

De plus, il est possible de connaitre les positions respectives des récepteurs 909, 910 et 911 dans ce même repère, grâce à la réception des coordonnées des récepteurs dans le repère de l'émetteur 908.

Avantageusement, grâce à l'utilisation du système magnétique décrit, les positions des mains de l'utilisateur (récepteurs 910 et 911) peuvent être connues en temps réel et la connaissance de la position de la tête (récepteur 909) permet de recaler avec une très bonne précision les données de la centrale inertielle 902 dans le repère de l'élément de sol 905, par exemple comme décrit précédemment en référence à l'étape 406 de la figure 4a.

Bien entendu le recalage de la centrale inertielle 902 peut aussi se faire plus précisément si on implémente un modèle de cinématique inverse lié au corps humain. Dans ce cas, la connaissance des données de position des pieds par les éléments mobiles hybrides 903 et 904 ainsi que les données issues de la centrale inertielle 902 et la position du récepteur 909 dans le repère de l'élément de sol 905 permettent de calculer la position des différentes parties qui composent le corps humain (jambes, colonne vertébrale, cou, tête).

Ainsi, dans les exemples des figures 8 et 9, la connaissance des données de position des pieds par les éléments mobiles hybrides (803 et 804 sur la figure 8 ; 903 et 904 sur la figure 9) ainsi que les données issues des centrales inertielles (802 et 808 sur la figure 8, 902 sur la figure 9) et du système magnétique (figure 9), permettent de calculer de manière fiable la position de différentes parties du corps humain (jambes, colonne vertébrale, cou, tête). On obtient ainsi une position plus précise du casque (801, 901) ainsi que des autres équipements par rapport aux éléments mobiles hybrides 803, 804, respectivement 903, 904.

**Revendications**

1. Elément mobile hybride (104, 105, 500, 600) adapté pour communiquer avec un dispositif pour interfacer une pluralité d'éléments mobiles avec un système informatique, le dispositif comprenant une surface de détection, ledit élément mobile hybride comprenant un module de localisation (501) comprenant les moyens suivants :

   - moyens (606) adaptés pour émettre un signal électromagnétique permettant au dispositif de calculer la position dudit module de localisation lorsque celui-ci est dans la portée de la surface de détection ; et,
   - moyens (602) adaptés pour recevoir un signal d'activation de la part du dispositif et, selon au moins une information dudit signal d'activation, activer lesdits moyens pour émettre un signal électromagnétique ;

   ledit élément mobile hybride (104, 105, 500, 600) étant **caractérisé en ce qu'**il comprend en outre :

   - une centrale inertielle (502, 607) solidaire dudit module de localisation ; et
   - des moyens de communication (503, 608) avec ledit dispositif, adaptés pour transmettre des données relatives à un déplacement de la centrale inertielle, lesdites données permettant de calculer la position du module de localisation lorsque le module de localisation est hors de portée de la surface de détection, empêchant ainsi la position d'être calculée à partir du signal électromagnétique.

2. Elément mobile hybride (104, 105, 500, 600) selon la revendication 1, dans lequel les moyens de communication (503, 608) sont en outre configurés pour recevoir au moins une information de position dudit module de localisation (501).

3. Elément mobile hybride (104, 105, 500, 600) selon la revendication 2, comprenant en outre des moyens de calcul hybride (609) d'une nouvelle information de position dudit module de localisation (501), à partir de l'information de position reçue et des données de déplacement de la centrale inertielle.

4. Elément mobile hybride (104, 105, 500, 600) selon la revendication 3, dans lequel les moyens de communication (503, 608) sont en outre configurés pour transmettre ladite nouvelle information de position dudit module de localisation.

5. Elément mobile hybride (104, 105, 500, 600) selon l'une des revendications 1 à 4, dans lequel lesdits moyens de communication (503, 608) sont configurés pour recevoir des données de recalage des données de déplacement de la centrale inertielle (502), lesdites données de recalage étant basées sur une information de position calculée à partir d'un signal électromagnétique émis par ledit module de localisation.

6. Elément mobile hybride (104, 105, 500, 600) selon l'une quelconque des revendications 1 à 4, dans lequel l'élément mobile hybride est configuré pour recaler les données de déplacement de la centrale inertielle à chaque activation dudit module de localisation (501).

7. Elément mobile hybride (104, 105, 500, 600) selon l'une quelconque des revendications 1 à 6, comprenant en outre des moyens de télé-alimentation pour alimenter électriquement des composants dudit module de localisation.

8. Elément mobile hybride (104, 105, 500, 600) selon l'une quelconque des revendications 1 à 7, comprenant en outre des moyens de stockage d'énergie.

9. Dispositif (101) pour interfacer une pluralité d'éléments mobiles hybrides selon l'une des revendications 1 à 8, (104, 105, 500, 600) avec un système informatique, le dispositif comprenant une surface de détection (210) et étant **caractérisé en ce qu'**il comprend les moyens suivants :

   - moyens (227) configurés pour activer séquentiellement au moins un module de localisation intégré à chaque élément mobile hybride de ladite pluralité d'éléments mobiles hybrides, un seul module de localisation pouvant être activé à un instant donné;
   - moyens (212, 213) configurés pour recevoir au moins un signal électromagnétique dudit au moins un module de localisation activé;
   - moyens (220, 230) configurés pour calculer en temps réel, à partir dudit au moins un signal électromagnétique reçu, au moins une information de position, dans un repère associé à ladite surface de détection, d'un élément mobile hybride comprenant ledit module de localisation activé;
   - moyens (228) de communication configurés pour recevoir des données relatives à un déplacement d'une centrale inertielle solidaire dudit au moins un module de localisation activé en l'absence de réception d'un signal électromagnétique lors de l'activation dudit au moins un module de localisation;

- moyens (230) de calcul hybride configurés pour calculer en temps réel, à partir des données de déplacement reçues et de l'information de position calculée, une nouvelle information de position dudit au moins un module de localisation activé, les moyens de calcul hybride étant mis en œuvre lorsque le module de localisation est hors de portée de la surface de détection, empêchant ainsi les moyens de calcul en temps réel d'obtenir ladite nouvelle information de position.

10. Dispositif (101) selon la revendication 9, dans lequel les moyens de communication (228) sont en outre configurés pour :

- transmettre l'information de position calculée à partir du signal électromagnétique reçu, à l'élément mobile hybride ; et
- pour recevoir ladite nouvelle information de position, calculée par l'élément mobile hybride à partir de l'information de position transmise.

11. Dispositif (101) selon la revendication 9 ou 10, dans lequel les moyens de communication (228) sont en outre configurés pour transmettre des données de recalage des données de déplacement de la centrale inertielle, lesdites données de recalage étant basées sur une information de position calculée à partir d'un signal électromagnétique reçu.

12. Dispositif (101) comprenant une pluralité de dispositifs selon l'une quelconque des revendications 9 à 11, un dispositif de ladite pluralité de dispositifs étant configuré pour contrôler au moins certains moyens mis en œuvre dans les autres dispositifs de ladite pluralité de dispositifs.

13. Procédé pour interfacer une pluralité d'éléments mobiles hybrides (104, 105, 500, 600) avec un système informatique, le procédé étant **caractérisé en ce qu'**il comprend les étapes suivantes :

- obtention (403) d'au moins une information de position d'un élément mobile hybride de ladite pluralité, ledit élément mobile hybride comprenant au moins un module de localisation activé, l'au moins une information de position étant calculée par un dispositif comprenant une surface de détection, à partir d'au moins un signal électromagnétique émis par ledit au moins un module de localisation activé intégré à l'élément mobile hybride lorsque celui-ci est dans la portée de la surface de détection, un seul module de localisation pouvant être activé à un instant donné ;

puis, en l'absence de réception ultérieure d'un signal électromagnétique lors de l'activation dudit au moins un module de localisation :

- obtention (405, 422) de données relatives à un déplacement d'une centrale inertielle solidaire dudit au moins un module de localisation activé ; et
- calcul hybride (407, 424) en temps réel, à partir des données de déplacement obtenues et de l'information de position obtenue, d'une nouvelle information de position dudit au moins un module de localisation activé, lesdites données permettant de calculer la position du module de localisation lorsque le module de localisation est hors de portée de la surface de détection, empêchant ainsi la position d'être calculée à partir du signal électromagnétique.

14. Procédé selon la revendication 13, comprenant en outre une étape de recalage (406, 423) des données de déplacement de la centrale inertielle.

15. Procédé selon la revendication 14, comprenant en outre une étape de mémorisation (404) de ladite information de position obtenue avec la date de son calcul, ladite étape de recalage (406) étant mise en œuvre à partir de ladite information de position mémorisée.

16. Procédé selon la revendication 14, comprenant en outre une étape de réception (420) d'une information indiquant un défaut de réception d'un signal électromagnétique en provenance dudit au moins un module de localisation activé.

17. Procédé selon la revendication 16, comprenant en outre une étape de réception (421) de données de recalage, ladite étape de recalage (423) étant mise en œuvre à partir des données de recalage reçues.

18. Procédé selon la revendication 17, comprenant en outre une étape de transmission (425) de la nouvelle information de position calculée.

19. Ensemble pour système de réalité virtuelle ou augmentée, destiné à équiper un utilisateur en mouvement, ledit système comprenant :

- au moins un élément mobile hybride selon l'une quelconque des revendications 1 à 8, adapté à être porté par l'utilisateur ;
- au moins un dispositif d'interfaçage selon l'une quelconque des revendications 9 à 12 ;
- un casque de réalité virtuelle ou augmentée, adapté à être porté par l'utilisateur, ledit casque étant connecté audit élément mobile hybride ou audit dispositif d'interfaçage de sorte à permettre le suivi de la position du casque en fonction de la position relative de l'élément mobile hybride et du casque et de la position de l'élément mobile hybride.

20. Ensemble selon la revendication 19, comprenant en outre un système de positionnement magnétique comprenant un moyen d'émission d'un champ magnétique dans une pluralité de directions et une pluralité de moyens de réception dudit champ magnétique émis par le moyen d'émission, ledit système de positionnement magnétique étant configuré pour déterminer la position d'au moins un des moyens de réception dans un repère centré sur le moyen d'émission, à partir du champ magnétique reçu par ledit moyen de réception.

**Patentansprüche**

1. Hybrides bewegliches Element (104, 105, 500, 600), das zur Kommunikation mit einer Vorrichtung zur Herstellung einer Schnittstelle zwischen einer Vielzahl beweglicher Elemente und einem Computersystem geeignet ist, wobei das hybride bewegliche Element ein Lokalisierungsmodul (501) umfasst, das die folgenden Mittel umfasst:

    - Mittel (606), die geeignet sind, ein elektromagnetisches Signal auszusenden, um zu ermöglichen, dass die Vorrichtung die Position des Lokalisierungsmoduls berechnen kann; und
    - Mittel (602), die geeignet sind, ein Aktivierungssignal des Teils der Vorrichtung zu empfangen und gemäß mindestens einer Information des Aktivierungssignals die Mittel zu aktivieren, um ein elektromagnetisches Signal auszusenden;

wobei das hybride bewegliche Element (104, 105, 500, 600) **dadurch gekennzeichnet ist, dass** es ferner umfasst:

    - eine Trägheitszentrale (502, 607), die an dem Lokalisierungsmodul angebracht ist; und
    - Kommunikationsmittel (503, 608) mit der Vorrichtung, die geeignet sind, Daten bezüglich einer Verschiebung der Trägheitszentrale zu übertragen, wobei die Daten die Berechnung der Position von dem Lokalisierungsmodul ermöglichen, während das Lokalisierungsmodul sich außerhalb der Reichweite der Detektionsoberfläche befindet und somit verhindert wird, dass die Position aus dem elektromagnetisches Signal berechnet werden kann.

2. Hybrides bewegliches Element (104, 105, 500, 600) nach Anspruch 1, wobei die Kommunikationsmittel (503, 608) ferner so konfiguriert sind, dass sie zumindest eine Positionsinformation von dem Lokalisierungsmodul (501) empfangen.

3. Hybrides bewegliches Element (104, 105, 500, 600) nach Anspruch 2, das ferner Hybridberechnungsmittel (609) einer neuen Positionsinformation des Lokalisierungsmoduls (501) aus den empfangenen Positionsinformationen und den Verschiebungsdaten der Trägheitszentrale umfasst.

4. Hybrides bewegliches Element (104, 105, 500, 600) nach Anspruch 3, wobei die Kommunikationsmittel (503, 608) ferner so konfiguriert sind, dass sie die neuen Positionsinformationen von dem Lokalisierungsmodul übertragen.

5. Hybrid bewegliches Element (104, 105, 500, 600) nach einem der Ansprüche 1 bis 4, wobei die Kommunikationsmittel (503, 608) so konfiguriert sind, dass sie Neueinstellungsdaten der Verschiebungsdaten von der Trägheitszentrale (502) empfangen, wobei die Neueinstellungsdaten auf Positionsinformationen basieren, die aus einem elektromagnetischen Signal berechnet werden, das von dem Lokalisierungsmodul ausgegeben wird.

6. Hybrides bewegliches Element (104, 105, 500, 600) nach einem der Ansprüche 1 bis 4, wobei das hybride bewegliche Element so konfiguriert ist, dass es die Verschiebungsdaten der Trägheitszentrale bei jeder Aktivierung des Lokalisierungsmoduls (501) neu einstellt.

7. Hybrides bewegliches Element (104, 105, 500, 600) nach einem der Ansprüche 1 bis 6, das ferner eine Fernspeiseeinrichtung zum elektrischen Speisen von Komponenten des Lokalisierungsmoduls umfasst.

8. Hybrides bewegliches Element (104, 105, 500, 600) nach einem der Ansprüche 1 bis 7, das ferner Energiespeichermittel umfasst.

9. Vorrichtung (101) zum Herstellen einer Schnittstelle zwischen einer Vielzahl von hybriden beweglichen Elementen nach einem der Ansprüche 1 bis 8 (104, 105, 500, 600) und einem Computersystem, wobei die Vorrichtung eine Detektionsoberfläche (210) aufweist, und **dadurch gekennzeichnet, dass** sie die folgenden Mittel umfasst:

    - Mittel (227), die so konfiguriert sind, dass sie sequentiell mindestens ein Lokalisierungsmodul aktivieren, das in jedes der Vielzahl von hybriden beweglichen Elementen integriert ist, wobei zu einer gegebenen Zeit nur ein Lokalisierungsmodul aktiviert werden kann;
- Mittel (212, 213), die so konfiguriert sind, dass sie mindestens ein elektromagnetisches Signal von dem mindestens einen aktivierten Lokalisierungsmodul empfangen;
- Mittel (220, 230), die so konfiguriert sind, dass sie in Echtzeit aus dem mindestens einen empfangenen elektromagnetischen Signal mindestens eine Positionsinformation in einem Bezugsrahmen, der der Detektionsoberfläche zugeordnet ist, eines hybriden beweglichen Elements, das das aktivierte Lokalisierungsmodul umfasst, berechnen;
- Kommunikationsmittel (228), die so konfiguriert sind, dass sie Daten empfangen, die sich auf eine Verschiebung einer Trägheitszentrale beziehen, die an dem mindestens einen Lokalisierungsmodul angebracht ist, das bei Fehlen des Empfangs eines elektromagnetischen Signals während der Aktivierung des mindestens einen Lokalisierungsmoduls aktiviert ist;
- Hybridberechnungsmittel (230), die so konfiguriert sind, dass sie in Echtzeit aus den empfangenen Verschiebungsdaten und den berechneten Positionsinformationen neue Positionsinformationen des mindestens einen aktivierten Lokalisierungsmoduls berechnen, wobei die Hybridberechnungsmittel verwendet werden, während das Lokalisierungsmodul sich außerhalb der Reichweite der Detektionsoberfläche befindet und somit verhindert wird, dass die Berechnungsmittel in Echtzeit die neuen Positionsinformationen erhalten können.

10. Vorrichtung (101) nach Anspruch 9, wobei die Kommunikationsmittel (228) ferner konfiguriert sind zum:

- Übertragen der aus dem empfangenen elektromagnetischen Signal berechneten Positionsinformationen an das hybride bewegliche Element; und
- zum Empfangen der neuen Positionsinformationen, die von dem hybriden beweglichen Element aus der übertragenen Positionsinformation berechnet worden sind.

11. Vorrichtung (101) nach Anspruch 9 oder 10, wobei die Kommunikationsmittel (228) so ferner konfiguriert sind, sie die Neueinstellungsdaten der Verschiebungsdaten von der Trägheitszentrale übertragen, wobei die Neueinstellungsdaten auf Positionsinformationen basieren, die aus einem empfangenen elektromagnetischen Signal berechnet werden.

12. Vorrichtung (101), die eine Vielzahl von Vorrichtungen nach einem der Ansprüche 9 bis 11 umfasst, wobei eine Vorrichtung der Vielzahl von Vorrichtungen so konfiguriert ist, dass sie mindestens einige Mittel steuert, die in den anderen Vorrichtungen der Vielzahl von Vorrichtungen implementiert sind.

13. Verfahren zum Herstellen einer Schnittstelle zwischen einer Vielzahl von hybriden beweglichen Elementen (104, 105, 500, 600) und einem Computersystem, wobei das Verfahren **dadurch gekennzeichnet ist, dass** es die folgenden Schritte umfasst:

- Erhalten (403) von mindestens einer Positionsinformation von einem hybriden beweglichen Element der Vielzahl, wobei das hybride bewegliche Element mindestens ein aktiviertes Lokalisierungsmodul umfasst, wobei die mindestens eine Positionsinformation von der Vorrichtung, die eine Detektionsoberfläche umfasst, aus mindestens einem elektromagnetischen Signal berechnet wird, das von dem mindestens einen aktivierten Lokalisierungsmodul ausgesendet wird, das in das hybride bewegliche Element integriert ist, während sich dieses in der Reichweite der Detektionsoberfläche befindet, wobei es möglich ist, ein einzelnes Lokalisierungsmodul zu einem gegebenen Zeitpunkt zu aktivieren;

dann, bei schließlich fehlendem Empfang eines elektromagnetischen Signals während der Aktivierung des mindestens einen Lokalisierungsmoduls:

- Erhalten (405, 422) von Daten bezüglich einer Verschiebung einer Trägheitszentrale, die an dem mindestens einen aktivierten Lokalisierungsmodul angebracht ist; und
- hybrides Berechnen (407, 424) in Echtzeit aus den erhaltenen Bewegungsdaten und den erhaltenen Positionsinformationen von neuen Positionsinformationen von dem mindestens einen aktivierten Lokalisierungsmodul, wobei die Daten die Berechnung der Position des Lokalisierungsmoduls ermöglichen, während das Lokalisierungsmodul sich außerhalb der Reichweite der Detektionsoberfläche befindet und somit verhindert wird, dass die Position aus dem elektromagnetisches Signal berechnet werden kann.

14. Verfahren nach Anspruch 13, das ferner einen Schritt eines Neueinstellens (406, 423) der Verschiebungsdaten der Trägheitszentrale umfasst.

15. Verfahren nach Anspruch 14, das ferner einen Schritt eines Speicherns (404) der mit dem Datum ihrer Berechnung erhaltenen Positionsinformation umfasst, wobei der Neueinstellungsschritt (406) ausgehend von den gespeicherten Positionsinformationen ausgeführt wird.

**16.** Verfahren nach Anspruch 14, des ferner einen Schritt eines Empfangens (420) von Informationen umfasst, die einen Fehler beim Empfang eines elektromagnetischen Signals von dem mindestens einen aktivierten Lokalisierungsmodul anzeigen.

**17.** Verfahren nach Anspruch 16, das ferner einen Schritt eines Empfangens (421) von Neueinstellungsdaten umfasst, wobei der Neueinstellungsschritt (423) ausgehend von den empfangenen Neueinstellungsdaten ausgeführt wird.

**18.** Verfahren nach Anspruch 17, das ferner einen Schritt eines Übertragens (425) der neuen berechneten Positionsinformationen umfasst.

**19.** Baugruppe für ein System mit virtueller oder erweiterter Realität (Virtual- oder Augmented-Reality-System) zur Ausstattung eines sich bewegenden Benutzers, wobei das System umfasst:

- mindestens ein hybrides bewegliches Element nach einem der Ansprüche 1 bis 8, das zum Mitführen durch den Benutzer geeignet ist;
- mindestens eine Schnittstellenvorrichtung nach einem der Ansprüche 9 bis 12;
- einen Helm mit virtueller oder erweiterter Realität, der vom Benutzer getragen werden kann, wobei der Helm mit dem hybriden beweglichen Element oder mit der Schnittstellenvorrichtung verbunden ist, so dass die Position des Helms in Abhängigkeit von der relativen Position des hybriden beweglichen Elements und des Helms und der Position des hybriden beweglichen Elements verfolgt werden kann.

**20.** Baugruppe nach Anspruch 19, die ferner ein magnetisches Positionierungssystem umfasst, das Mittel zum Aussenden eines Magnetfeldes in einer Vielzahl von Richtungen und eine Vielzahl von Mitteln zum Empfangen des durch die Aussendemittel ausgesendeten Magnetfeldes umfasst, wobei das magnetische Positionierungssystem so konfiguriert ist, dass es die Position von mindestens einem der Empfangsmittel in einem auf die Aussendemittel zentrierten Bezugspunkt aus dem durch die Empfangsmittel empfangenen Magnetfeld bestimmt.

**Claims**

**1.** A hybrid mobile element (104, 105, 500, 600) adapted to communicate with a device for interfacing a plurality of mobile elements with a computer system, the device comprising a detection surface, said hybrid mobile element comprising a location module (501) comprising the following means:

- means (606) adapted to emit an electromagnetic signal for the device to compute the position of said location module when the latter is within the range of the detection surface; and
- means (602) adapted to receive an activation signal from the device and, according to at least an item of information from said activation signal, to activate said means for emitting an electromagnetic signal;

said hybrid mobile element (104, 105, 500, 600) being **characterized in that** it further comprises:

- an inertial measurement unit (502, 607) integral with said location module; and
- means (503, 608) for communicating with said device and adapted for transmitting data relating to a movement of the inertial measurement unit, said data being for computing the position of the location module when the location module is out of range of the detection surface, thus preventing the position from being computed from the electromagnetic signal.

**2.** The hybrid mobile element (104, 105, 500, 600) according to claim 1, wherein the communication means (503, 608) are further configured to receive at least an item of position information of said location module (501).

**3.** The hybrid mobile element (104, 105, 500, 600) according to claim 2, further comprising means of hybrid computation (609) of a new item of position information of said location module (501), from the received position information and the movement data of the inertial measurement unit.

**4.** The hybrid mobile element (104, 105, 500, 600) according to claim 3, wherein the communication means (503, 608) are further configured to transmit said new item of position information of said location module.

**5.** The hybrid mobile element (104, 105, 500, 600) according to any of claims 1 to 4, wherein said communication means (503, 608) are configured to receive repositioning data from the movement data of the inertial measurement unit (502), said repositioning data being based on an item of position information computed from an electromagnetic signal emitted by said location module.

**6.** The hybrid mobile element (104, 105, 500, 600) according to any of claims 1 to 4, wherein the hybrid mobile element is configured to reset the movement data of the inertial measurement unit each time said location module (501) is activated.

7. The hybrid mobile element (104, 105, 500, 600) according to any of claims 1 to 6, further comprising remote power supply means for providing electrical power to components of said location module.

8. The hybrid mobile element (104, 105, 500, 600) according to any of claims 1 to 7, further comprising energy storage means.

9. A device (101) for interfacing a plurality of hybrid mobile elements (104, 105, 500, 600) according to any of claims 1 to 8 with a computer system, the device comprising a detection surface (210) and being **characterized in that** it comprises the following means:

- means (227) configured to sequentially activate at least one location module integrated into each hybrid mobile element of said plurality of hybrid mobile elements, a single location module being activatable at a given time;
- means (212, 213) configured to receive at least one electromagnetic signal from said at least one activated location module;
- means (220, 230) configured to compute in real time, from said at least one received electromagnetic signal, at least one item of position information, in a reference associated with said detection surface, of a hybrid mobile element comprising said activated location module;
- communication means (228) configured to receive data relating to a movement of an inertial measurement unit secured to said at least one activated location module when no electromagnetic signal is received during the activation of said at least one location module;
- means (230) of hybrid computation configured to compute in real time, from the received movement data and the computed item of position information, a new item of position information of said at least one activated location module, the means of hybrid computation being used when the location module is out of range of the detection surface, thus preventing the in-real-time computation means from obtaining said new item of position information.

10. The device (101) according to claim 9, wherein the communication means (228) are further configured to:

- transmit the item of position information computed from the received electromagnetic signal, to the hybrid mobile element; and
- to receive said new item of position information computed by the hybrid mobile element, from the transmitted item of position information.

11. The device (101) according to claim 9 or 10, wherein the communication means (228) are further configured to transmit repositioning data from the movement data of the inertial measurement unit, said repositioning data being based on an item of position information computed from a received electromagnetic signal.

12. The device (101) comprising a plurality of devices according to any of claims 9 to 11, a device of said plurality of devices being configured to control at least some means implemented in the other devices of said plurality of devices.

13. A method for interfacing a plurality of hybrid mobile elements (104, 105, 500, 600) with a computer system, the method being **characterized in that** it comprises the following steps:

- obtaining (403) at least an item of position information of a hybrid mobile element of said plurality, said hybrid mobile element comprising at least one activated location module, said at least one item of position information being computed by a device comprising a detection surface, from at least one electromagnetic signal emitted by said at least one activated location module integrated into the hybrid mobile element when it is within a range of the detection surface, a single location module being activatable at a given time;

then, when no electromagnetic signal is subsequently received during the activation of said at least one location module:

- obtaining (405, 422) data relating to a movement of an inertial measurement unit integral with said at least one activated location module; and
- performing hybrid computation (407, 424) in real time, from the obtained movement data and the obtained item of position information, of a new item of position information of said at least one activated location module, said data being for computing the position of the location module when the location module is out of range of the detection surface, thus preventing the position from being computed from the electromagnetic signal.

14. The method of claim 13, further comprising a step of resetting (406, 423) the movement data of the inertial measurement unit.

15. The method of claim 14, further comprising a step of storing (404) said item of position information obtained with the date of its computation, said resetting step (406) being implemented from said stored position information.

16. The method of claim 14, further comprising a step of receiving (420) an item of information indicating a failure to receive an electromagnetic signal originating from said at least one activated location module.

17. The method of claim 16, further comprising a step of receiving (421) resetting data, said resetting step (423) being implemented from the received resetting data.

18. The method of claim 17, further comprising a step of transmitting (425) the computed new item of position information.

19. An assembly for a virtual or augmented reality system for equipping a user in motion, said system comprising:

> - at least one hybrid mobile element according to any of claims 1 to 8, which is adapted to be worn by the user;
> - at least one interfacing device according to any one of claims 9 to 12;
> - a virtual or augmented reality headset, which is adapted to be worn by the user, said headset being connected to said hybrid mobile element or to said interfacing device in order to allow the position of the headset to be tracked based on the relative position of the hybrid mobile element and the headset, and on the position of the hybrid mobile member.

20. The assembly of claim 19, further comprising a magnetic positioning system comprising means for emitting a magnetic field in a plurality of directions and a plurality of means for receiving said magnetic field emitted by the emitting means, said magnetic positioning system being configured to determine the position of at least one of the receiving means in a reference centred on the emitting means, from the magnetic field received by said receiving means.

Fig. 1

Fig. 1a

Fig. 1b

Fig. 2

Fig. 3a

Fig. 3b

401 — Sélection et activation
d'un module de localisation

402 — Réception d'un signal du
module de localisation
sélectionné ?

Non · · · · · · · · · · · · · · · · · · · · · · · · · · · · · · · · · · Oui

Obtention de données de
déplacement de la
centrale inertielle — 405

403 — Calcul de la position de
l'élément mobile
hybride à partir du
signal reçu

Recalage des données
de déplacement à partir
d'une position
mémorisée en 404 — 406

404 — Mémorisation de la
position calculée et de
la date du calcul

Calcul hybride de la
position de l'élément
mobile hybride à partir
des données de
déplacement (recalées) — 407

Fig. 4a

408 Réception d'un signal d'activation

409 Emission d'un signal par le module de localisation activé

410 Transmission des données de déplacement de la centrale inertielle

Fig. 4b

411 — Sélection et activation
d'un module de localisation

412 —

Non — Réception d'un signal du
module de localisation
sélectionné ? — Oui

Transmission d'une
information indiquant
qu'aucun signal n'a été
reçu du module — 416

Calcul de la position de
l'élément mobile
hybride à partir du
signal reçu — 413

Réception de la position
de l'élément mobile
hybride — 417

414 — Mémorisation de la
position calculée et de
la date du calcul

415 — Transmission à
l'élément mobile
hybride de données de
recalage basées sur la
position mémorisée

Fig. 4c

418 — Réception d'un signal d'activation

419 — Emission d'un signal par le module de localisation activé

420
Oui — Réception d'une information indiquant qu'aucun signal n'a été reçu en provenance du module de localisation ? — Non

Obtention de données de déplacement de la centrale inertielle — 422

421 — Réception de données de recalage

Recalage des données de déplacement à partir de données de recalage reçues en 421 — 423

Calcul hybride de la position de l'élément mobile hybride à partir des données de déplacement (recalées) — 424

Transmission de la position calculée — 425

Fig. 4d

Fig. 5a

Fig. 5b

600

| CPU 609 | Centrale inertielle 607 | Moyens de communication 608 |

Alimentation 601

Récepteur HF et détecteur de commande d'activation 602

Commutateur 603

606

Oscillateur local 605

Amplificateur sélectif 604

Fig. 6

Fig. 7

Fig. 8

Fig. 9

**EP 3 185 110 B1**

**RÉFÉRENCES CITÉES DANS LA DESCRIPTION**

**Documents brevets cités dans la description**

- GB 2428802 A

- FR 1057014